(19) Europäisches Patentamt
European Patent Office
Office européen des brevets

(11) EP 2 233 506 B1

(12) EUROPEAN PATENT SPECIFICATION

(45) Date of publication and mention of the grant of the patent:
**12.12.2012 Bulletin 2012/50**

(21) Application number: **09700983.1**

(22) Date of filing: **08.01.2009**

(51) Int Cl.:
***C08F 255/02*** (2006.01)
***C08K 3/00*** (2006.01)
***C08F 2/02*** (2006.01)
***B32B 27/32*** (2006.01)
***C08L 23/10*** (2006.01)
***C08L 51/06*** (2006.01)
***C08F 4/42*** (2006.01)

(86) International application number:
**PCT/JP2009/050119**

(87) International publication number:
**WO 2009/088033 (16.07.2009 Gazette 2009/29)**

(54) **MODIFIED PROPYLENE RESIN**

MODIFIZIERTES PROPYLENHARZ

RÉSINE PROPYLÈNE MODIFIÉE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **11.01.2008 JP 2008004341**
**28.05.2008 JP 2008139254**

(43) Date of publication of application:
**29.09.2010 Bulletin 2010/39**

(73) Proprietors:
- **Mitsui Chemicals, Inc.**
**Tokyo 105-7117 (JP)**
- **Prime Polymer Co., Ltd.**
**Tokyo 105-7117 (JP)**

(72) Inventors:
- **ITAKURA, Keita**
**Sodegaura-shi**
**Chiba 299-0265 (JP)**
- **IWASHITA, Toru**
**Utsunomiya-shi**
**Tochigi 321-0953 (JP)**
- **HASHIZUME, Satoshi**
**Takaishi-shi**
**Osaka 592-8501 (JP)**
- **OHNISHI, Rikuo**
**Sodegaura-shi**
**Chiba 299-0265 (JP)**
- **GODA, Hirofumi**
**Sodegaura-shi**
**Chiba 299-0265 (JP)**

(74) Representative: **Raynor, Stuart Andrew**
**J A Kemp**
**14 South Square**
**Gray's Inn**
**London WC1R 5JJ (GB)**

(56) References cited:
**EP-A2- 1 580 230**
**DE-A1-102005 053 762**
**JP-A- 3 091 514**
**JP-A- 9 003 141**
**JP-A- 2002 020 436**
**JP-A- 2002 020 560**
**JP-A- 2004 197 068**
**JP-A- 2007 112 954**
**JP-A- 2007 270 064**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 233 506 B1

## Description

Technical Field

The present invention relates to a modified propylene resin. In particular, the present invention relates to a modified propylene resin containing very small amounts of low-crystalline and low-molecular-weight components.

Background Art

Polypropylene based resins have low specific gravities, high rigidity, and furthermore, good formability, so that the propylene resins are used as various structural parts, e.g., miscellaneous daily goods, kitchenware, home appliances, machine parts, electric parts, and automobile parts. Moreover, in order to take advantage of the merits, an increase in rigidity due to combination of the polypropylene resin and glass fibers has been studied and application to automobile module parts as an alternative to metals, engine fans, and the like have been advanced.

In many cases, the automobile module parts as an alternative to metals, engine fans, and the like are put under the load of stress for the long term and are used at high temperatures. Therefore, the durability for the parts is required. Regarding a polypropylene resin-glass fiber composite, in order to increase the strength thereof, it is necessary that the adhesion strength between the propylene resin and the glass fibers is improved. Consequently, addition of a modified propylene resin produced by grafting an ethylenic unsaturated bond-containing carboxylic acid, e.g., maleic anhydride, on a propylene polymer in the presence of an initiator, e.g., an organic peroxide, or through ultraviolet or radiation irradiation has been studied. However, regarding a production process of the above-described modified propylene resin, a part of the propylene polymer undergoes an oxidation reaction or is decomposed in grafting. Therefore, if the amount of addition of the initiator, e.g., the organic peroxide, is increased to improve the amount of grafts, the molecular weight of the modified propylene resin may be reduced. As a result, the adhesion strength between the propylene resin and the glass fibers may become insufficient.

As for methods for solving the problems, for example, Japanese Unexamined Patent Application Publication No. 2002-20436 discloses a method, in which an ethylenic unsaturated bond-containing monomer is grafted on an ultrahigh molecular weight propylene polymer, Japanese Unexamined Patent Application Publication No. 2002-256023 discloses a method, in which an ethylenic unsaturated bond-containing carboxylic acid is grafted on a propylene polymer in the presence of a low-temperature decomposition type organic peroxide, and another method, in which grafting is conducted in the coexistence of styrene and an ethylenic unsaturated bond-containing carboxylic acid, is disclosed (Fumio Ide, "Jitsuyou Porima- Aroi Sekkei (Practical Design of Polymer Alloy)", Kogyou Chousakai Publishing Co., Ltd, P51 (1996)). Modified propylene resins having relatively high molecular weights and high amounts of grafts can be produced by these methods.

However, against the backdrop of improvement of safety and reliability of structural parts, further improvement of the durability of the propylene resin-glass fiber composite has been required and achievement of still higher performance of the modified propylene resin has been required.

Furthermore, the modified propylene resin is used as a layer to adhere a polypropylene resin layer and another polymer layer in a multilayer film for wrapping foods and the like, a modifying agent to give paintability, printability, suitability for evaporation to a film or a formed product, and a polymer alloy compatibilizer between a polypropylene resin and an engineering plastic. Regarding these modified propylene resin uses as well, achievement of still higher performance has been required.

Patent Document 1: Japanese Unexamined Patent Application Publication No. 2002-20436

Patent Document 2: Japanese Unexamined Patent Application Publication No. 2002-256023

EP 1 580 230 discloses a resin composition comprising a modified polypropylene having a $T_m$ of 152°C, an amount of grafts of unsaturated bond containing monomer of 3.8% by weight and an intrinsic viscosity of 0.8 dl/g measured in decalin at 135°C.

Disclosure of Invention

Problems to be Solved by the Invention

Regarding the present invention, it was noted that when a low-crystalline or low-molecular-weight component was present, a reduction with time in adhesion strength between a propylene resin and glass fibers and a reduction with time in adhesion strength between a polypropylene resin layer and another polymer layer occurred and obtainment of a modified propylene resin satisfying the above-described requirements has been attempted. That is, it is an object of

the present invention to provide a modified propylene resin containing very small amounts of low-crystalline and low-molecular-weight components. In particular, it is an object of the present invention to provide a modified propylene resin containing very small amounts of low-crystalline and low-molecular-weight components and being capable of meeting high levels of requirements, e.g., an improvement in durability of the propylene resin-glass fiber composite, and provide a method for manufacturing the modified propylene resin. Means for Solving the Problems

The present invention, which solves the above-described problems, relates to a modified propylene resin satisfying the following requirements (1) to (4).

(1) The melting point (Tm) measured with a differential scanning calorimeter (DSC) is 140°C or higher.
(2) The amount of grafts of ethylenic unsaturated bond-containing monomer after boiling p-xylene washing is 0.1 to 5 percent by weight.
(3) The amount of components soluble in o-dichlorobenzene at 70°C is 1.5 percent by weight or less
(4) The intrinsic viscosity [η] measured at 135°C using a decalin solvent is 0.1 to 4 dl/g. As for preferable aspect of the above-described invention, the above-described modified propylene resin further satisfies the following requirement (5).
(5) Preferably, a change in the amount of components soluble in o-dichlorobenzene at 70°C between before and after the boiling p-xylene washing is less than 0.5 percent by weight. It is preferable that the above-described modified propylene resin further satisfies the following requirement (6).
(6) The amount of chlorine measured through ion chromatography is 3 ppm by weight or less.

Another invention, which solves the above-described problems, relates to a method for manufacturing a modified propylene resin satisfying the following requirements (1) to (6), the method including the steps of blending 100 parts by weight of propylene polymer (A) produced through polymerization in the presence of a metallocene catalyst with 0.1 to 20 parts by weight of ethylenic unsaturated bond-containing monomer (B) and 0.001 to 10 parts by weight of organic peroxide (C) and effecting modification in a solvent or in a molten state.

(1) The melting point (Tm) measured with a differential scanning calorimeter (DSC) is 140°C or higher.
(2) The amount of grafts of ethylenic unsaturated bond-containing monomer is 0.1 to 5 percent by weight.
(3) The amount of components soluble in o-dichlorobenzene at 70°C is 1.5 percent by weight or less.
(4) The intrinsic viscosity [η] measured at 135°C using a decalin solvent is 0.1 to 4 dl/g.
(5) A change in the amount of components soluble in o-dichlorobenzene at 70°C between before and after the boiling p-xylene washing is less than 0.5 percent by weight.
(6) The amount of chlorine measured through ion chromatography is 3 ppm by weight or less.

As for preferable aspect of the above-described method for manufacturing a modified propylene resin, the method includes the steps of blending 100 parts by weight of propylene polymer (A) with 0.1 to 20 parts by weight of ethylenic unsaturated bond-containing monomer (B) and 0.001 to 10 parts by weight of organic peroxide (C) and kneading them by using an extruder, so as to effect modification in a molten state. Preferably, the propylene polymer (A) has a melting point (TM) measured with a differential scanning calorimeter (DSC) or 150°C or higher.

The other inventions relate to:

- a modified propylene resin (D) produced by the above-described manufacturing method;
- a polypropylene based resin composition (S1)comprising 0.1 to 40 percent by weight of modified propylene resin (D) and 60 to 99.9 percent by weight of polypropylene based resin (P) (where the total of (D) and (P) is 100 percent by weight);
- a polypropylene based resin composition (S2) comprising 0.1 to 40 percent by weight of modified propylene resin (D), 3 to 70 percent by weight of filler (F), and, 20 to 96.9 percent by weight of polypropylene based resin (P) (wherein the total of (D), (F), and (P) is 100 percent by weight);
- a formed product comprising the polypropylene based resin composition (S1) or (S2); and
- a laminate comprising the polypropylene based resin composition (S1) or (S2) in at least one layer.

Preferably in the propylene based resin composition (S2), there is (a) at least one type of inorganic filler selected from the group consisting of glass fibers, carbon fibers, talc, and magnesium sulfate, or (b) at least one type of organic filler selected from the group consisting of wood flour and cellulose.

Advantages

The modified propylene resin according to the present invention can meet high levels of requirements, e.g., an

improvement in durability of the propylene resin-glass fiber composite because the amount of low-crystalline and low-molecular-weight components is very small and, furthermore, the balance between the amount of grafts of ethylenic unsaturated bond-containing monomer and the molecular weight of the modified propylene resin is excellent. Brief Description of Drawings

[Fig. 1] Fig. 1 is a schematic diagram showing the shape and dimensions of a test piece used in a vibration fatigue test.

[Fig. 2] Fig. 2 is a schematic diagram showing double bond structures in propylene polymers.

Best Modes for Carrying Out the Invention

A modified propylene resin and a manufacturing method therefor will be described below in detail.

<Modified propylene resin>

The modified propylene resin according to the present invention satisfies the following requirements (1) to (4), preferably satisfies the requirement (5) or (6) besides the following requirements (1) to (4), and further preferably satisfies the requirements (5) and (6) besides the following requirements (1) to (4).

(1) The melting point (Tm) measured with a differential scanning calorimeter (DSC) is 140°C or higher.
(2) The amount of grafts of ethylenic unsaturated bond-containing monomer after boiling p-xylene washing is 0.1 to 5 percent by weight.
(3) The amount of components soluble in o-dichlorobenzene at 70°C is 1.5 percent by weight or less.
(4) The intrinsic viscosity [η] is 0.1 to 4 dl/g measured at 135°C using a decalin solvent.
(5) A change in the amount of components soluble in o-dichlorobenzene at 70°C between before and after the hot xylene washing is less than 0.5 percent by weight.
(6) The amount of chlorine measured through ion chromatography is 3 ppm by weight or less.

The above-described requirements (1) to (4) to be satisfied by the modified propylene resin according to the present invention, the requirement (5) to be satisfied preferably, and the requirement (6) to be satisfied further preferably will be described below in detail with reference to a composite made from propylene resin/modified propylene resin/glass fiber composition (propylene resin-glass fiber composite) as an example.

Requirement (1)

The modified propylene resin according to the present invention has a melting point (Tm) measured with a differential scanning calorimeter (DSC) of 140°C or higher, preferably 145°C or higher, further preferably 150°C or higher. If the melting point is lower than 140°C, the rigidity of the modified propylene resin is reduced, and the rigidity of a composite obtained by adding the modified propylene resin to a propylene resin-glass fiber composition is reduced.

A method for measuring a melting point with a differential scanning calorimeter (DSC) is as described in examples in detail.

Requirement (2)

The amount of grafts of ethylenic unsaturated bond-containing monomer after hot xylene washing is 0.1 to 5 percent by weight, preferably 0.3 to 5 percent by weight, and further preferably 0.5 to 5 percent by weight. If the amount of grafts is less than 0.1 percent by weight, an effect of improving adhesion between the propylene resin and glass fibers due to the modified propylene resin is reduced, and the rigidity of the resulting propylene resin-glass fiber composite is reduced. Furthermore, if the amount of grafts exceeds 5 percent by weight, the dispersibility of the modified propylene resin in the propylene resin is reduced. Consequently, an effect of improving adhesion between the propylene resin and glass fibers due to the modified propylene resin is reduced, and the rigidity of the resulting propylene resin-glass fiber composite is reduced.

Here, the hot xylene washing refers to an operation to wash the modified propylene resin with heated xylene, and refers to, for example, an operation, in which about 2 g of modified propylene resin is heated and dissolved completely into 500 ml of boiling p-xylene and after cooling, the resulting solution is put into 1,200 ml of acetone, and deposits are filtrated and dried.
A method for measuring an amount of grafts is as described in examples in detail.

Requirement (3)

The amount of components soluble in o-dichlorobenzene at 70°C is 1.5 percent by weight or less, preferably 1.0 percent by weight or less, and further preferably 0.5 percent by weight or less. The components soluble in o-dichlorobenzene at 70°C are derived from the low-crystalline or low-molecular-weight propylene polymer. If the amount thereof exceeds 1.5 percent by weight, the fatigue strength of the propylene resin-glass fiber composite is reduced.

The measurement of the amount of components soluble in o-dichlorobenzene at 70°C was conducted through cross fractionation chromatography measurement. This measuring method is as described in examples in detail.

Requirement (4)

The intrinsic viscosity [η] is 0.1 to 4 dl/g, preferably 0.4 to 3 dl/g, and further preferably 0.6 to 2 dl/g. If the intrinsic viscosity [η] is less than 0.1 dl/g, the strength of the modified propylene resin in itself is reduced and, thereby, the strength of the propylene resin-glass fiber composite is reduced. If the intrinsic viscosity [η] exceeds 4 dl/g, the dispersibility of the modified propylene resin in the propylene resin is reduced. Consequently, an effect of improving adhesion between the propylene resin and glass fibers due to the modified propylene resin is reduced, and the rigidity of the resulting propylene resin-glass fiber composite may be reduced.

A method for measuring an intrinsic viscosity [η] is as described in examples in detail.

Requirement (5)

A change in the amount of components soluble in o-dichlorobenzene at 70°C between before and after the hot xylene washing, that is, the difference between the amount (percent by weight) of components soluble in o-dichlorobenzene at 70°C before the hot xylene washing and the amount (percent by weight) of components soluble in o-dichlorobenzene at 70°C after the hot xylene washing, is less than 0.5 percent by weight, preferably less than 0.3 percent by weight, and further preferably less than 0.1 percent by weight. If a change in the amount of components soluble in o-dichlorobenzene at 70°C between before and after the hot xylene washing exceeds 0.5 percent by weight, the fatigue strength of the propylene resin-glass fiber composite is reduced.

Requirement (6)

The amount of chlorine measured through ion chromatography is 3 ppm by weight or less. If the amount of chlorine measured through ion chromatography exceeds 3 ppm by weight, the fatigue strength of the propylene resin-glass fiber composite may be reduced because of a degrading effect due to residual chlorine in forming the propylene resin-glass fiber composite and in the use of the propylene resin-glass fiber composite product.

The modified propylene resin according to the present invention can be used as various modifying agents because the amount of low-crystalline and low-molecular-weight components is very small and, in addition, the balance between the amount of grafts of ethylenic unsaturated bond-containing monomer and the molecular weight of the modified propylene resin is excellent. Specifically, it is possible to apply to a fatigue characteristic improver and a strength improver for the propylene resin-glass fiber composition. Furthermore, it is also possible to use as a rigidity and strength improver for a composition containing propylene resin-various fillers and fibers. Specific examples of fillers and fibers include inorganic fillers, e.g., talc, clay, calcium carbonate, mica, silicates, carbonates, and glass fibers, and organic fibers, e.g., carbon fibers, polyethylene terephthalate fibers, polyethylene naphthalate fibers, and kenaf fibers. Moreover, it is also possible to apply to an adhesion layer of a multilayer formed product of a propylene resin and other polymers, and there is a feature that deterioration in adhesion strength with time is reduced as compared with that of a modified propylene resin in a related art. In addition, it is possible to apply as a paintability improver, a printability improver, an agent for improving suitability for evaporation, and a compatibilizer with other resins, e.g., nylon, for the propylene resin composition to various formed products in the field of wrapping materials, e.g., films and sheets, the field of industrial materials, the fields of automobiles, and the like.

The modified propylene resin according to the present invention can be produced by, for example, the following method.

<Method for manufacturing modified propylene resin>

A method for manufacturing a modified propylene resin according to the present invention is a method, in which a propylene polymer (A) is modified with an ethylenic unsaturated bond-containing monomer (B) and an organic peroxide (C) in a solvent or in a molten state, and the above-described modified propylene resin is produced.

Propylene polymer (A)

The propylene polymer (A) is a propylene homopolymer, a propylene-α-olefin random copolymer made from propylene and at least one type of C2 or α-olefins having the carbon number of 4 to 20, or a propylene-α-olefin block copolymer. In particular, the propylene homopolymer and the propylene-α-olefin random copolymer are desirable. The melting point of the propylene polymer (A) is preferably 145°C or higher, further preferably 150°C or higher, and particularly preferably 155°C or higher. If the melting point of the propylene polymer (A) is lower than 145°C, the melting point of the resulting modified propylene resin becomes lower than 140°C, so that the rigidity and the strength of the propylene resin-glass fiber composite tend to be lowered. The intrinsic viscosity [η] of the propylene polymer (A) is preferably 0.5 to 15 dl/g, and further preferably 1.0 to 10 dl/g. The MFR is preferably 0.001 to 1,500 g/10 min, and further preferably 0.005 to 100 g/10 min.
The molecular weight distribution (Mw/Mn) of the propylene polymer (A) is preferably 1.5 to 4.0, further preferably 1.5 to 3.5, and most preferably 1.5 to 3.0. If the molecular weight distribution (Mw/Mn) of the propylene polymer (A) exceeds 4.0, the molecular weight of the low-molecular-weight component contained in the propylene polymer (A) is further reduced in production of the modified propylene resin. As a result, the amount of low-molecular-weight components contained in the modified propylene resin increases and the fatigue strength of the propylene resin-glass fiber composite tends to be reduced.
The amount of residual chlorine contained in a material used for the propylene polymer (A) is 3 ppm by weight or less, and preferably 1 ppm by weight or less. If the above-described amount of residual chlorine exceeds 3 ppm by weight, isolated chlorine is generated during production of the modified propylene resin, and a low-molecular-weight modified propylene resin may be by-produced or the amount of residual chlorine contained in the modified propylene resin increases and the fatigue strength of the propylene resin-glass fiber composite may be reduced.
Furthermore, if small amounts of double bond structures are contained in the propylene polymer (A), a reaction between the above-described double bond structure and the ethylenic unsaturated bond-containing monomer occurs easily during production of the modified propylene resin, and the amount of grafts of ethylenic unsaturated bond-containing monomer in the modified propylene resin may increase.
Regarding the propylene polymer (A), a total of the proportion of hetero bonds based on 2,1-insertion and the proportion of hetero bonds based on 1,3-insertion of propylene monomers in the whole propylene structural units, the proportions being determined on the basis of $^{13}C$-NMR spectrum, is preferably 0.1 percent by mole or less, and more preferably 0.05 percent by mole or less. In the case where the total of the proportion of hetero bonds based on 2,1-insertion and the proportion of hetero bonds based on 1,3-insertion of the propylene polymer (A) is within the above-described range, the melting point of the modified propylene resin becomes higher, and the strength of the propylene resin-glass fiber composite increases.
The propylene polymer (A) is produced in the presence of the metallocene catalyst. The propylene polymer (A) can be produced by using a publicly known metallocene catalyst insofar as the characteristics of the modified propylene resin according to the present invention can be satisfied.
Examples of metallocene compounds including a ligand having a cyclopentadienyl skeleton include metallocene compounds (D1) represented by a general formula [I] described below and cross-linking type metallocene compounds (D2) represented by a general formula [II] described bellow from the viewpoint of the chemical structures thereof. Among them, cross-linking type metallocene compounds (D2) are preferable.
[Chemical formula 1]

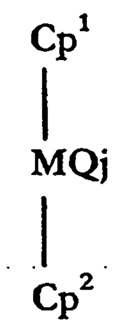 ---- [I]

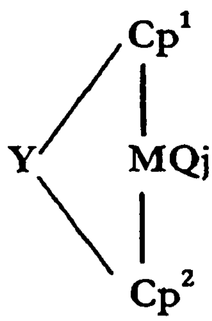 ---- [II]

[In the above-described general formulae [I] and [II], M represents a titanium atom, a zirconium atom, or a

hafnium atom, Q is selected from a halogen atom, a hydrocarbon group, an anionic ligand, and a neutral ligand, which is a lone pair of electrons and which can coordinate, j represents an integer of 1 to 4, and $Cp^1$ and $Cp^2$ are independently a cyclopentadienyl group or a substituted cyclopentadienyl group, where $Cp^1$ and $Cp^2$ may be the same or different from each other and can form a sandwich structure together with M. Here, the substituted cyclopentadienyl groups include an indenyl group, a fluorenyl group, an azulenyl group and groups, in which these are substituted with at least one hydrocarbyl group, and in the case of the indenyl group, the fluorenyl group, or the azulenyl group, a part of double bonds of the benzene skeleton condensed with the cyclopentadienyl group may be hydrogenated. In the general formula [II], Y represents a divalent hydrocarbon group having the carbon number of 1 to 20, a divalent halogenated hydrocarbon group having the carbon number of 1 to 20, a divalent silicon-containing group, a divalent germanium-containing group, a divalent tin-containing group, -O-, -CO-, -S-, -SO-, $-SO_2-$, -Ge-, -Sn-, $-NR^a-$, $-P(R^a)-$, $-P(O)(R^a)-$, $-BR^a-$, or $-AlR^a-$. (In this regard, $R^a$ may be the same or be different from each other and is a hydrocarbon group having the carbon number of 1 to 20, a halogenated hydrocarbon group having the carbon number of 1 to 20, a hydrogen atom, a halogen atom, or a nitrogen compound residue, in which one or two hydrocarbon groups having the carbon number of 1 to 20 are bonded to a nitrogen atom).]

In particular, the metallocene catalyst favorably used in the present invention is the metallocene catalyst made from at least one type of compound selected from the group consisting of cross-linkable metallocene compounds represented by a general formula [III], as described below, disclosed in International Patent Publication (WO 01/27124) filed by the applicant of the present invention, organometallic compounds, organic aluminum oxy compounds, and compounds capable of forming ion pairs through reaction with metallocene compounds and, furthermore, a granular carrier, as necessary.

[Chemical formula 2]

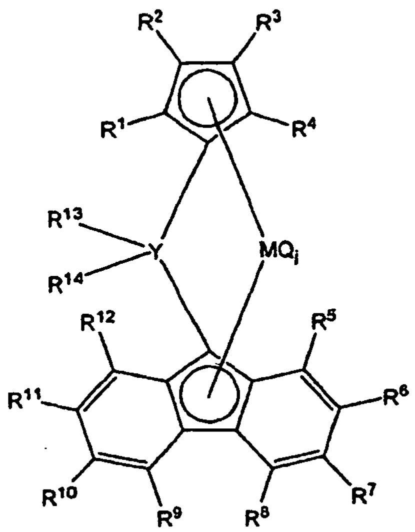

· · · [III]

In the above-described general formula [III], $R^1$, $R^2$, $R^3$, $R^4$, $R^5$, $R^6$, $R^7$, $R^8$, $R^9$, $R^{10}$, $R^{11}$, $R^{12}$, $R^{13}$, and $R^{14}$ are selected independently from hydrogen, a hydrocarbon group, and a silicon-containing group and may be the same or be different. Examples of the above-described hydrocarbon groups can include linear chain hydrocarbon groups, e.g., a methyl group, an ethyl group, a n-propyl group, an allyl group, a n-butyl group, a n-pentyl group, a n-hexyl group, a n-heptyl group, a n-octyl group, a n-nonyl group, and n-decanyl group; branched hydrocarbon groups, e.g., an isopropyl group, a tert-butyl group, an amyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group, and a 1-methyl-1-isopropyl-2-methylpropyl group; cyclic saturated hydrocarbon groups, e.g., a cyclopentyl group, a cyclohexyl group, a cycloheptyl group, a cyclooctyl group, a norbornyl group, and an adamantyl group; cyclic unsaturated hydrocarbon groups, e.g., a phenyl group, a tolyl group, a naphthyl group, a biphenyl group, a phenanthryl group, and anthracenyl group; saturated hydrocarbon groups including circular unsaturated hydrocarbon groups serving as substituents, e.g., benzyl group, a cumyl group, a 1,1-diphenylethyl group, and a triphenylmethyl group; and a hetero atom-containing hydrocarbon groups, e.g., a methoxy group, an ethoxy group, a phenoxy group, a furyl group, an N-methylamino group, an N,N-dimethylamino group, an N-phenylamino group, a pyryl group, and a thienyl group. Examples of silicon-containing groups

can include a trimethylsilyl group, a triethylsilyl group, a dimethylphenylsilyl group, a diphenylmethylsilyl group, and a triphenylsilyl group. Furthermore, adjacent substituents $R^5$ to $R^{12}$ may be bonded to each other so as to form a ring. Examples of such substituted fluorenyl groups can include a benzofluorenyl group, a dibenzofluorenyl group, an octahydrodibenzofluorenyl group, an octamethyloctahydrodibenzofluorenyl group, and an octamethyltetrahydrodicyclopentafluorenyl group.

Regarding the metallocene compounds related to the present invention, in the above-described general formula [III], preferably, $R^1$, $R^2$, $R^3$, and $R^4$ serving as substituents of the cyclopentadienyl ring represent hydrogen or hydrocarbon groups having the carbon number of 1 to 20, and it is more preferable that $R^3$ represents a hydrocarbon group having the carbon number of 1 to 20.

Furthermore, in the above-described general formula [III], preferably, $R^5$ to $R^{12}$ serving as substituents of the fluorene ring represent hydrocarbon groups having the carbon number of 1 to 20. Examples of hydrocarbon groups having the carbon number of 1 to 20 can include the above-described hydrocarbon groups. The adjacent substituents $R^5$ to $R^{12}$ may be bonded to each other so as to form a ring.

Regarding the metallocene compounds related to the present invention, in the above-described general formula [III], preferably, Y cross-linking the cyclopentadienyl ring and the fluorenyl ring represents an element of group 14, more preferably carbon, silicon, or germanium, and further preferably a carbon atom.

Moreover, $R^{13}$ and $R^{14}$ serving as substituents of Y represent hydrocarbon groups having the carbon number of 1 to 20. They may be the same or different from each other and they may be bonded to each other so as to form a ring. Preferably, $R^{14}$ represents an aryl group having the carbon number of 6 to 20. Examples of aryl groups can include the above-described cyclic unsaturated hydrocarbon groups, the saturated hydrocarbon groups including circular unsaturated hydrocarbon groups serving as substituents, and the hetero atom-containing circular unsaturated hydrocarbon groups. In this regard, $R^{13}$ and $R^{14}$ may be the same or different from each other and they may be bonded to each other so as to form a ring. As for such a substituent, a fluorenylidene group, a 10-hydroanthracenylidene group, a dibenzocycloheptadienylidene group or the like is preferable. In this regard, $R^{13}$ and $R^{14}$ may be mutually bonded to adjacent substituents of $R^5$ to $R^{12}$ or adjacent substituents of $R^1$ to $R^4$, so as to form a ring.

In the above-described general formula [III], preferably, M represents a transition metal of group 4 and, further preferably, Ti, Zr, Hf, and the like are mentioned. Furthermore, Q is selected from a halogen, a hydrocarbon group, an anionic ligand, and a neutral ligand, which is a lone pair of electrons and which can coordinate, in combination of the same type or different types. Subscript j represents an integer of 1 to 4. In the case where j is 2 or more, individual Q may be the same or mutually different. Specific examples of halogens include fluorine, chlorine, bromine, and iodine. Specific examples of hydrocarbon groups includes the same as those described above. Specific examples of anionic ligands include alkoxy groups, e.g., methoxy, tert-butoxy, and phenoxy, carboxylate groups, e.g., acetate and benzoate, and sulfonate groups, e.g., mesylate and tosylate. Specific examples of neutral ligands, which are a lone pair of electrons and which can coordinate, include organic phosphorus compounds, e.g., trimethylphosphine, triethylphosphine, triphenylphosphine, and diphenylmethylphosphine, and ethers, e.g., tetrahydrofuran, diethyl ether, dioxane, and 1,2-dimethoxyethane. It is preferable that at least one of Q is a halogen or an alkyl group.

Preferable examples of the above-described cross-linked metallocene compounds can include isopropyl(3-tert-butyl-5-methylcyclopentadienyl)(3,6-di-tert-butylfluorenyl)zirconium dichloride, 1-phenylethylidene(4-tert-butyl-2-methylcyclopentadienyl)(octamethyloctahydrodibenzofluorenyl)z irconium chloride, and [3-(1',1',4',4',7',7',10',10'-octamethyloctahydrodibenzo[b,h]fluorenyl)(1,1,3-trimethyl-5-tert-butyl-1,2,3,3a-tetrahydropentalene)]zirconium dichloride.

Furthermore, in the metallocene catalyst related to the present invention, regarding at least one type of compound, which is used together with a group 4 transition metal compound represented by the above-described general formula [I] and which forms ion pairs through reaction with organometallic compounds, organic aluminum oxy compounds, and metallocene compounds, and furthermore, a granular carrier used as necessary, the compounds disclosed in the above-described publication (WO 01/27124) filed by the applicant of the present invention and Japanese Unexamined Patent Application Publication No. 11-315109 can be used without limitation.

Ethylenic unsaturated bond-containing monomer (B)

The ethylenic unsaturated bond-containing monomer (B) used in the present invention is a compound having an ethylenic unsaturated bond and at least one type of polar group in combination in the molecule. Examples of types of polar groups include a carboxyl group, an acid anhydride group, an epoxy group, a hydroxyl group, an amino group, an amide group, an imide group, an ester group, an alkoxysilane group, an acid halide group, an aromatic ring, and a nitrile group.

Specific examples of ethylenic unsaturated bond-containing monomers (B) include unsaturated carboxylic acids, anhydrides or derivatives thereof, e.g., metal salts, hydroxyl-containing ethylenic unsaturated compounds, epoxy-containing ethylenic unsaturated compounds, styrene based monomers, acrylonitrile, vinyl acetate, and vinyl chloride.

Among them, unsaturated carboxylic acids, anhydrides or derivatives thereof, hydroxyl-containing ethylenic unsaturated compounds, and epoxy-containing ethylenic unsaturated compounds are preferable.

Specific examples of the above-described unsaturated carboxylic acids and anhydrides or derivatives thereof used as the ethylenic unsaturated bond-containing monomer (B) can include unsaturated carboxylic acids, e.g., acrylic acid, methacrylic acid, α-ethylacrylic acid, maleic acid, fumaric acid, tetrahydrophthalic acid, methyltetrahydrophthalic acid, citraconic acid, crotonic acid, isocrotonic acid, endocis-bicyclo[2.2.1]hept-2,3-dicarboxylic acid (nadic acid, trademark), and methyl-endocis-bicyclo[2.2.1]hept-5-ene-2,3-dicarboxylic acid (methyl nadic acid, trademark); anhydrides of these unsaturated carboxylic acids; unsaturated carboxylic acid halides, unsaturated carboxylic acid amides, unsaturated carboxylic acid imides, and derivatives, e.g., esters, of unsaturated carboxylic acids. More specific examples can include malenyl chloride, maleimide, maleic anhydride, citraconic anhydride, monomethyl maleate, dimethyl maleate, glycidyl maleate, and methyl methacrylate. Among them, acrylic acid, maleic acid, nadic acid, maleic anhydride, nadic anhydride, and methyl methacrylate are preferable. One type of the unsaturated carboxylic acids and anhydrides or derivatives thereof can be used alone or at least two types can be used in combination.

Specific examples of the above-described hydroxyl-containing ethylenic unsaturated compounds used as the ethylenic unsaturated bond-containing monomer (B) can include (meth)acrylic acid esters, e.g., 2-hydroxyethyl (meth) acrylate, 2-hydroxypropyl (meth)acrylate, 3-hydroxypropyl (meth)acrylate, 2-hydroxy-3-phenoxypropyl (meth)acrylate, 3-chloro-2-hydroxypropyl (meth)acrylate, glycerin mono(meth)acrylate, pentaerithritol mono(meth)acrylate, trimethylolpropane (meth)acrylate, tetramethylolethane mono(meth)acrylate, butanediol mono(meth)acrylate, polyethylene glycol mono(meth)acrylate, and 2-(6-hydroxyhexanoiloxy)ethyl acrylate. In this regard, "(meth)acry" refers to "acry" and/or "methacry".

Moreover, as for the hydroxyl-containing ethylenic unsaturated compound, 10-undecene-1-ol, 1-octene-3-ol, 2-methanol norbornene, hydroxystyrene, hydroxyethylvinyl ether, hydroxybutylvinyl ether, N-methylol acrylamide, 2-(meth)acryloyloxyethyl acid phosphate, glycerin monoallyl ether, allyl alcohol, allyloxyethanol, 2-butene-1,4-diol, glycerin monoalcohol, and the like can also be used.

Among the above-described hydroxyl-containing ethylenic unsaturated compounds, 2-hydroxyethyl (meth)acrylate and 2-hydroxypropyl (meth)acrylate are preferable. One type of the hydroxyl-containing ethylenic unsaturated compound can be used alone or at least two types can be used in combination.

Examples of the above-described epoxy-containing ethylenic unsaturated compounds used as the ethylenic unsaturated bond-containing monomer (B) include unsaturated glycidyl esters represented by the formula (IV) described below, unsaturated glycidyl esters represented by the formula (V) described below, and epoxyalkenes represented by the formula (VI) described below.

[Chemical formula 3]

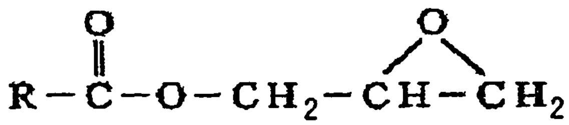

(IV)

[In the formula (IV), R represents a hydrocarbon group having a polymerizable ethylenic unsaturated bond.]

[Chemical formula 4]

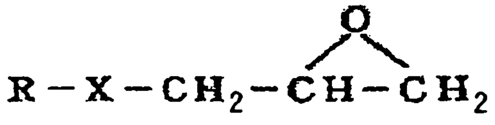

(V)

[In the formula (V), R represents a hydrocarbon group having a polymerizable ethylenic unsaturated bond. X is represented by $-CH_2-O-$ or

[Chemical formula 5]

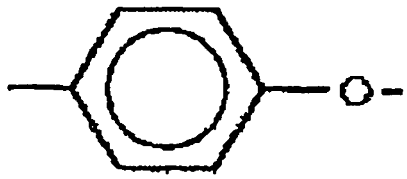

which is a divalent group.]

[Chemical formula 6]

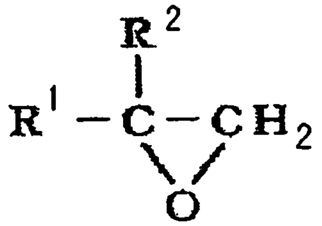

(VI)

[In the formula (VI), $R^1$ represents a hydrocarbon group having a polymerizable ethylenic unsaturated bond, and $R^2$ represents a hydrogen atom or a methyl group.]

More preferable examples of the above-described epoxy-containing ethylenic unsaturated compounds include glycidyl acrylate, glycidyl methacrylate, mono or diglycidyl ester of itaconic acid, mono, di, or triglycidyl ester of butene tricarboxylic acid, mono or diglycidyl ester of citraconic acid, mono or diglycidyl ester of endo-cis-bicyclo[2.2.1]hept-5-ene-2,3-dicarboxylic acid (nadic acid, trademark), mono or diglycidyl ester of endo-cis-bicyclo[2.2.1]hept-5-ene-2,3-dimethyl-2,3-dicarboxylic acid (methyl nadic acid, trademark), mono or diglycidyl ester of allyl succinic acid, glycidyl ester of p-styrene carboxylic acid, allyl glycidyl ether, 2-methylallyl glycidyl ether, styrene-p-glycidyl ether, 3,4-epoxy-1-butene, 3,4-epoxy-3-methyl-1-butene, 3,4-epoxy-1-pentene, 3,4-epoxy-3-methyl-1-pentene, 5,5-epoxy-1-hexene, and vinylcyclohexene monoxide. Among them, glycidyl acrylate and glycidyl methacrylate are preferable. One type of the epoxy-containing ethylenic unsaturated compound can be used alone or at least two types can be used in combination.

Among the ethylenic unsaturated bond-containing monomers (B), unsaturated carboxylic acid anhydrides are particularly preferable, and maleic anhydride is most preferable.

Organic peroxide (C)

Specific examples of organic peroxides (C) used in the present invention can include peroxyketals, e.g., 1,1-bis(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, and 2,2-bis(t-butylperoxy)butane; dialkyl peroxides, e.g., di-t-butyl peroxide, dicumyl peroxide, t-butylcumyl peroxide, $\alpha,\alpha'$-bis(t-butylperoxy)diisopropylbenzene, 2,5-dimethyl-2,5-bis(t-butylperoxy)hexane, and 2,5-dimethyl-2,5-bis(t-butylperoxy)hexyne-3; diacylperoxides, e.g., acetyl peroxide, isobutyl peroxide, octanoyl peroxide, decanoyl peroxide, lauroyl peroxide, 3,5,5-trimethylhexanoyl peroxide, benzoyl peroxide, 2,5-dichlorobenzoyl peroxide, and m-trioyl peroxide; peroxy esters, e.g., t-butyloxy acetate, t-butylperoxyisobutylate, t-butylperoxy-2-ethylhexanoate, t-butylperoxylaurylate, t-butylperoxybenzoate, di-t-butylperoxy isophthalate, 2,5-dimethyl-2,5-bis(benzoylperoxy)hexane, t-butylperoxy maleic acid, t-butylperoxy isopropyl carbonate, and cumylperoxy octate; peroxydicarbonates, e.g., di (2-ethylhexyl)peroxydicarbonate and di(3-methyl-3-methoxybutyl)peroxydicarbonate; and hydroperoxides, e.g., t-butyl hydroperoxide, cumene hydroperoxide, diisopropylbenzene hydroperoxide, 2,5-dimethylhexane-2,5-dihydroperoxide, and 1,1,3,3-tetramethylbutyl hydroperoxide. Among them, t-butylperoxybenzoate, 2,5-dimethyl-2,5-bis(t-butylperoxy) hexane, t-butylperoxy-2-ethylhexanoate, dicumyl peroxide, and the like are preferable.

Method for modifying propylene resin

In a method for manufacturing a modified propylene resin according to the present invention, modification is

conducted by reacting the propylene polymer (A) and the ethylenic unsaturated bond-containing monomer (B) under a heating condition in the presence of the organic peroxide (C). The above-described modification reaction can be conducted in the presence of a solvent or be conducted in no presence of a solvent.

In the case where the reaction is conducted in the presence of a solvent, examples of solvents can include aliphatic hydrocarbons, e.g., hexane, heptane, octane, decane, dodecane, tetradecane, and kerosene, alicyclic hydrocarbons, e.g., methylcyclopentane, cyclohexane, methylcyclohexane, cyclooctane, and cyclododecane, aromatic hydrocarbons, e.g., benzene, toluene, xylene, ethylbenzene, cumene, ethyltoluene, trimethylbenzene, cymene, and diisopropylbenzene, and halogenated hydrocarbons, e.g., chlorobenzene, bromobenzene, o-dichlorobenzene, carbon tetrachloride, trichloroethane, trichloroethylene, tetrachloroethane, and tetrachloroethylene. The temperature of the above-described modification reaction is usually 50°C to 250°C, and preferably 60°C to 200°C. The reaction time is usually 15 minutes to 20 hours, and preferably about 0.5 to 10 hours. In this regard, the modification reaction can be conducted under the condition of any one of atmospheric pressure and application of pressure. The proportion of the ethylenic unsaturated bond-containing monomer (B) supplied to the reaction is usually 0.2 to 100 parts by weight, preferably 0.5 to 50 parts by weight relative to 100 parts by weight of propylene polymer (A).

In the case where the reaction is conducted in no presence of a solvent, it is particularly preferable that the modification reaction is effected through kneading in a molten state. Specifically, publicly known various methods for mixing resins with each other or a resin and a solid or liquid additive can be adopted. Preferable examples can include a method, in which all the individual components are mixed with a Henschel mixer, a ribbon blender, a blender, or the like and the resulting mixture is kneaded, and a method, in which some of components are combined, mixing is conducted on a combination basis with a Henschel mixer, a ribbon blender, a blender, or the like so as to form homogeneous mixtures and, thereafter, the resulting mixtures are kneaded. As for the device for kneading, previously known kneading devices, e.g., a Banbury mixer, a Plastomill, a Brabender plastograph, and a single or twin screw extruder, can be adopted widely. In a particularly preferable method, a single or twin screw extruder is used, and kneading is conducted by supplying a polypropylene resin, an unsaturated carboxylic acid compound and/or a derivative thereof, and an organic peroxide, which are sufficiently preliminarily mixed in advance, from a supply hole of the extruder. This is because continuous production can be conducted by this method and, thereby, the productivity is improved. The temperature of a portion to conduct kneading in the kneader (for example, a cylinder temperature with respect to the extruder) is 100°C to 300°C, and preferably 160°C to 250°C. If the temperature is too low, the amount of grafts is not always improved, and if the temperature is too high, decomposition of the resin may occur. The kneading time is 0.1 to 30 minutes, and particularly preferably 0.5 to 5 minutes. If the kneading time is too short, a sufficient amount of grafts is not always obtained, and if the kneading time is too long, decomposition of the resin may occur.

Regarding the method for manufacturing the modified propylene resin according to the present invention, in the case where the production is conducted through melt-kneading, as for the proportions of blending of individual components, for example, the ethylenic unsaturated bond-containing monomer (B) is 0.1 to 20 parts by weight, preferably 0.3 to 10 parts by weight, and further preferably 0.5 to 5 parts by weight, and the organic peroxide (C) is 0.001 to 10 parts by weight, preferably 0.01 to 5 parts by weight, and further preferably 0.1 to 4 parts by weight relative to 100 parts by weight of propylene polymer (A).

<Polypropylene based resin composition>

The modified propylene resin (D) according to the present invention can be used as various modifying agents because the amount of low-crystalline and low-molecular-weight components is very small and, in addition, the balance between the amount of grafts of ethylenic unsaturated bond-containing monomer and the molecular weight of the modified propylene resin is excellent. Specific examples include embodiments, e.g., a polypropylene resin composition (S1) containing 0.1 to 40 percent by weight of modified propylene resin (D) and 60 to 99.9 percent by weight of polypropylene based resin (P) (where the total of (D) and (P) is 100 percent by weight) and a polypropylene based resin composition (S2) containing 0.1 to 10 percent by weight of modified propylene resin (D), 3 to 70 percent by weight of filler (F), and 20 to 96.9 percent by weight of polypropylene based resin (P) (where the total of (D), (F), and (P) is 100 percent by weight).

Polypropylene based resin (P)

The polypropylene based resin (P) refers to a homopolymer of propylene, a copolymer of propylene, ethylene, and α-olefin, and a block copolymer of propylene, ethylene, and α-olefin. Specific examples of the above-described α-olefins can include 1-butene, 2-methyl-1-propene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, and 1-dodecene. Among them, α-olefins of 1-butene,

1-pentene, 1-hexene, and 1-octene can be used favorably.

The melting point (Tm) of the polypropylene based resin (P) is usually 100°C to 170°C, and preferably 115°C to 167°C. Furthermore, the melt flow rate (MFR: ASTM D1238, 230°C, load 2.16 kg) of the polypropylene based resin (P) is usually 0.3 to 200 g/10 min, preferably 2 to 150 g/10 min, and further preferably 10 to 100 g/10 min.

In the polypropylene resin composition (S1), regarding the amounts of the modified propylene resin (D) and the polypropylene based resin (P) (where the total of (D) and (P) is 100 percent by weight), the modified propylene resin (D) is 0.1 to 40 percent by weight and the propylene based resin (P) is 60 to 99.9 percent by weight, preferably the modified propylene resin (D) is 0.3 to 20 percent by weight and the propylene based resin (P) is 80 to 99.7 percent by weight, and further preferably the modified propylene resin (D) is 0.5 to 10 percent by weight and the propylene based resin (P) is 90 to 99.5 percent by weight.

Filler (F)

The fillers (F) are roughly divided into inorganic fillers, e.g., glass fibers, carbon fibers, talc, magnesium sulfate fibers, mica, calcium carbonate, magnesium hydroxide, ammonium phosphates, silicates, and carbonates, and organic fillers, e.g., wood flour, cellulose, polyester fibers, nylon fibers, kenaf fibers, bamboo fibers, jute fibers, rice flour, starch, and cone starch.

As for the inorganic filler, glass fibers, carbon fibers, talc, and magnesium sulfate are used favorably. The explanations will be made below in detail.

(Glass fiber)

Examples of glass fibers can include filament-like fibers produced by melt-spinning glass, e.g., E glass (Electrical glass), C glass (Chemical glass), A glass (Alkali glass), S glass (High strength glass), and alkali-resistant glass. The glass fibers are contained in a composition in the form of short fibers of 1 mm or less or long fibers of 1 mm or more.

In the case where the short fiber glass is used, the short fiber glass content in the polypropylene based composition (S2) is 3 to 70 percent by weight, preferably 10 to 50 percent by weight, and further preferably 20 to 40 percent by weight.

In the case where the long fiber glass is used, a publicly known blending method can be used. In particular, as described in Japanese Unexamined Patent Application Publication No. 2006-117839 and Japanese Unexamined Patent Application Publication No. 2004-2837, it is desirable that fiber-reinforced propylene based resin including surface-treated glass fibers, which are treated with a sizing agent containing modified polyolefin resin for treating glass fibers, is worked into pellets having a length of 2 to 200 mm, and the pellets are blended into the composition of the modified propylene resin (D) and the polypropylene based resin (P) according to the present invention. In the polypropylene based resin composition (S2), the content of long fiber glass is 3 to 70 percent by weight, preferably 10 to 70 percent by weight, and further preferably 35 to 55 percent by weight.

(Carbon fiber)

The fiber diameter of carbon fibers used in the polypropylene based resin composition (S2) according to the present invention is more than 2 μm, and 15 μm or less, preferably 3μ m to 12 μm, and more preferably 4 μm to 10 μm. In the case where the fiber diameter is 2 μm or less, the rigidity of the fiber is significantly reduced, and if 15 μm is exceeded, the aspect ratio (ratio of the length (L) to the thickness (D): L/D) is reduced, so that sufficient efficiencies of reinforcement in rigidity, heat resistance, and the like are not obtained unfavorably. Here, the fiber diameter can be determined by cutting the fibers perpendicularly to the fiber direction, measuring the diameters of the cross-sections thereof through microscope observation, and calculating the number average diameter of 100 or more of fibers.

Furthermore, the fiber length of the carbon fiber is 1 to 20 mm, preferably 2 to 15 mm, and more preferably 3 to 10 mm. In the case where the fiber length is less than 1 mm, the aspect ratio is small and a sufficient reinforcement efficiency is not obtained and if the fiber length exceeds 20 mm, the workability and the appearance significantly deteriorate unfavorably.

Here, the fiber length can be determined by conducting measurement with a vernier caliper and calculating the number average fiber length of 100 or more of fibers.

As for carbon fiber used in the polypropylene based resin composition according to the present invention, previously publicly known carbon fibers can be used without limitation insofar as the above-described shape is satisfied. Examples of carbon fibers can include PAN based carbon fibers formed by using polyacrylonitrile as a raw material and pitch based carbon fibers formed by using pitch as a raw material. These carbon fibers can be used as so-called chopped carbon fibers produced by cutting raw fibers into a desired length or may be subjected to a gathering and bundling treatment by using various sizing agents, as necessary. Preferably, the sizing agent used in the gathering and bundling treatment

melts at 200°C or lower, because it is required that the sizing agent is melted in melt-kneading with the polypropylene resin.

Specific examples of the above-described chopped carbon fibers can include a trade name "TORAYCA CHOP" produced by Toray Industries, Ltd., a trade name "PYROFIL (chop)" produced by MITSUBISHI RAYON CO., LTD., and a trade name "BESFIGHT (chop)" produced by Toho Tenax Co., Ltd., regarding the PAN based carbon fibers and a trade name "DIALEAD" produced by Mitsubishi Chemical Functional Products, Inc., a trade name "DONACARBO (chop)" produced by Osaka Gas Chemicals Co., Ltd., and a trade name "KRECA CHOP" produced by KUREHA CORPORATION regarding pitch based carbon fibers.

These carbon fiber components are made into composites together with other components constituting the polypropylene based resin composition according to the present invention by using a melt-kneading apparatus, e.g., an extruder. In this melt-kneading,
it is preferable to select a combining method, in which excessive breakage of the carbon fiber component is prevented. Regarding melt-kneading with an extruder, examples of methods facilitating realization of this can include a method, in which the components other than the carbon fiber component are sufficiently melt-kneaded and, thereafter, the carbon fiber component is fed from the position in the side downstream of the position, where the resin component is melted completely, by a side feed method or the like, so as to disperse the gathered and bundled fibers while breakage of fibers is minimized.
The propylene based resin composition (S2) containing the carbon fibers according to the present invention may be used in the form of long carbon fiber reinforced propylene based resin pellets produced by impregnating carbon fibers, which are surface-treated with a sizing agent having a reactive functional group, with the modified propylene resin (D) and the polypropylene based resin (P) according to the present invention. In the above-described long carbon fiber reinforced propylene based resin pellets, it is desirable that the long carbon fibers having the same length are arranged in parallel in the length direction of the pellet and the length of the carbon fiber is 4 to 50 mm.

Furthermore, the propylene based resin composition (S2) containing the carbon fibers according to the present invention may also be used in the shape of a carbon fiber reinforced sheet produced by impregnating carbon fibers, which are surface-treated with a sizing agent having a reactive functional group, with the modified propylene resin (D) and the polypropylene based resin (P) according to the present invention.

In the case where the carbon fibers are used, the content of carbon fibers in the polypropylene resin composition (S2) is 3 to 70 percent by weight, preferably 5 to 70 percent by weight, and further preferably 5 to 55 percent by weight.

(Talc)

The talc is produced by pulverizing hydrous magnesium silicate. The crystal structure of hydrous magnesium silicate is a pyrophillite type three-layer structure and in the talc, this structure is stacked. More preferably, the talc is produced by pulverizing a crystal of hydrous magnesium silicate finely to almost unit layers and is tabular.

Preferably, the average particle diameter of the above-described talc is 3 μm or less. Here, the average particle diameter of talc refers to a 50% equivalent particle diameter $D_{50}$ determined from an integral distribution curve on the basis of the minus sieve method, in which the talc is dispersed in water or alcohol serving as a dispersion solvent and measurement is conducted with a centrifugal sedimentation type particle size distribution analyzer. The talc may be used with no treatment or be used after the surface is treated with various silane coupling agents, titanium coupling agents, higher fatty acids, higher fatty acid esters, higher fatty acid amides, higher fatty acid salts, or other surfactants in order to improve the interfacial adhesion to the propylene based resin and dispersibility into the propylene based resin composition.

In the case where the talc is used, the content of talc in the polypropylene resin composition (S2) is 3 to 70 percent by weight, preferably 5 to 50 percent by weight, and further preferably 10 to 40 percent by weight.

(Magnesium sulfate fiber)

In the case where the magnesium sulfate fibers are used, the average fiber length thereof is preferably 5 to 50 μm, and more preferably 10 to 30 μm. Furthermore, the average fiber diameter of the magnesium sulfate fiber is preferably 0.3 to 2 μm, and more preferably 0.5 to 1 μm. Examples of products include "Moshige" produced by UBE INDUSTRIES, LTD. In the case where the magnesium sulfate fibers are used, the content of magnesium sulfate fibers in the polypropylene resin composition (S2) is 3 to 70 percent by weight, preferably 5 to 50 percent by weight, and further preferably 10 to 40 percent by weight.
As for the above-described organic filler, wood flour, cellulose fibers, and crystalline cellulose are used favorably. The wood flour and the cellulose will be described below in detail.

(Wood flour)

Wood flour produced into a fine powder by, for example, crushing wood with a cutter mill or the like and conducting pulverization with a ball mill, an impeller mill, or the like can be used. The average fiber diameter thereof is usually 1 to 200 μm, and preferably 10 to 150 μm. If the average particle diameter is less than 1 μm, it is difficult to handle and, in addition, especially in the case where the amount of blend of woody filler is large, poor dispersion into the resin causes a reduction in mechanical strength of the resulting woody resin foam-molded product. Furthermore, if 200 μm is exceeded, the homogeneity, the flatness, and the mechanical strength of the formed product are reduced. In the case where the wood flour is used, the content of wood flour in the polypropylene resin composition (S2) is usually 3 to 70 percent by weight, preferably 10 to 50 percent by weight, and further preferably 15 to 40 percent by weight.

(Cellulose)

As for the cellulose, cellulose fibers and crystalline cellulose are used favorably.
It is preferable that the cellulose fibers are high-purity fibers. For example, fibers having an α-cellulose content of 80 percent by weight or more are preferable. Fibers having an average fiber diameter of 0.1 to 1,000 μm and an average fiber length of 0.01 to 5 mm can be used as the organic fibers, e.g., cellulose fibers.
The crystalline cellulose is produced by partially depolymerizing α-cellulose, which is obtained as pulp from a fibrous plant, with a mineral acid, followed by refining. Examples of products include "CEOLUS" produced by Asahi Kasei Corporation.
In the case where the cellulose is used, the content of cellulose in the polypropylene resin composition (S2) is usually 3 to 70 percent by weight, preferably 5 to 50 percent by weight, and further preferably 10 to 40 percent by weight.

<u>Formed product made of polypropylene based resin composition (S1)</u>

The polypropylene based resin composition (S1) made from the modified propylene resin (D) and the propylene based polymer (A) according to the present invention can be formed into various formed products by publicly known forming methods, e.g., injection molding, extrusion, coextrusion, blow molding, injection stretching blow molding, biaxial stretching molding, extrusion foam molding, and injection foam molding. Since the modified propylene resin (D) according to the present invention has a feature that very small amounts of low-crystalline and low-molecular-weight components are contained, various formed products made of the polypropylene based resin composition (S1) have functionality, e.g., paintability, printability, and suitability for evaporation. Moreover, in the case where the polypropylene based resin composition (S1) is applied to a multilayer film for wrapping foods and the like, it is possible to use as a layer to adhere a polypropylene resin layer and another polymer layer.

<u>Formed product made of polypropylene based resin composition (S2)</u>

The polypropylene based resin composition (S2) made from the modified propylene resin (D), the filler (F), and the propylene based polymer (A) according to the present invention can be formed into various formed products by publicly known forming methods, e.g., injection molding, extrusion, coextrusion, blow molding, injection stretching blow molding, biaxial stretching molding, extrusion foam molding, and injection foam molding. Since the modified propylene resin (D) according to the present invention has a feature that very small amounts of low-crystalline and low-molecular-weight components are contained, an improvement in the durability, e.g., the fatigue strength and an improvement in the mechanical strength of the propylene resin-filler composite can be expected. Examples of products of the polypropylene based resin composition (S2) including various fillers will be described below.

(Glass fiber)

Specifically, formed products obtained from the polypropylene based resin composition (S2), according to the present invention, containing glass fibers are favorably used for automobile parts, two-wheeled vehicle·bicycle parts, house parts, home appliance parts, and power tool parts. Examples of automobile parts include front ends, engine fans, fan shrouds, cooling fans, engine under covers, radiator boxes, side doors, back door inners, back door outers, outer panels, roof rails, door handles, luggage boxes, wheel covers, handles, cooling modules, air cleaner parts, air cleaner cases, seat levers, and pedals. Examples of two-wheeled vehicle-bicycle parts include luggage boxes, handles, and wheels. Examples of house parts include warm water cleaning toilet seat parts, bath room parts, legs of chairs, valves, and meter boxes. Examples of home appliance parts include OA housings, air conditioner outdoor unit fans, washing machine parts, and washing and drying machine parts, and specifically, balance rings, dehydration receiver covers, dehydration receivers, and exhaust vent guides. Examples of power tool parts include power drills. In addition, the stress-resistant formed product according to the present invention is also useful as mower handles, hose joints, resin bottles, concrete formworks, pipe joints, and generator covers.

(Carbon fiber)

Formed products obtained from the polypropylene based resin composition (S2), according to the present invention, containing carbon fibers have high strength and, in addition, the forming cycle can be shortened remarkably as compared with that of a carbon fiber reinforced resin including a thermosetting resin as a matrix in the related art. Consequently, the formed products obtained from the polypropylene based resin composition (S2), according to the present invention, containing carbon fibers can be used for, for example, industrial materials, e.g., aerospace parts, sporting goods, automobile parts, electronic and electric parts, and OA devices, favorably.

(Talc, magnesium sulfate)

The polypropylene based resin composition (S2) according to the present invention has the features that the adhesion at the interfaces between polypropylene and talc and between polypropylene and magnesium sulfate increase, and an increase in strength can be achieved. Therefore, examples of formed products obtained from the polypropylene based resin composition (S2) include automobile interior and exterior parts, engine under covers, and home appliances.

(Wood flour)

Formed products exhibiting excellent woody feeling and formability and having mechanical strength sufficient for a structural parts can be obtained from the polypropylene based resin composition (S2), according to the present invention, containing wood flour. Taking the advantage of the above-described features, it is possible to effectively use for products in the fields of various construction materials, e.g., floor materials and floor finishing materials, wall materials and wall finishing materials, ceiling materials and ceiling finishing materials, thresholds, window frames, and sashes, structural materials or panel materials of furniture and the like, vehicle interior materials, and exterior materials or housing of OA devices and home appliances.

(Cellulose)

The polypropylene based resin composition (S2), according to the present invention, containing cellulose is lightweight and has high strength and, therefore, can be used for housings of home appliances, e.g., personal computers and cellular phones. Furthermore, it is also possible to use for business machines, e.g., stationery, daily necessities, e.g., furniture, sporting goods, automobile interiors, e.g., dashboards, luggage boxes of airplanes, structural members of transporting apparatuses, and construction materials of house, e.g., sash. Moreover, since the insulating property is excellent, it is also possible to use for electric·electronic·telecommunications devices.

EXAMPLES

Next, the present invention will be described in detail with reference to examples, although the present invention is not limited to such examples. The analytical methods adopted in the present invention are as described below.

[m1] Melting point (Tm)

The melting points (Tm) of the propylene homopolymer and the modified propylene resin were measured by using a differential scanning calorimeter (DSC, produced by PerkinElmer, Inc.). Here, the melting points (Tm) was defined as an endothermic peak at the third step.

(Sample preparation condition)

Forming method: pressing
Mold: thickness 0.2 mm (a sample was sandwiched between aluminum foil and was pressed by using a mold)
Forming temperature: 240°C (heating temperature 240°C,
preheating time: 7 minutes)
Pressing pressure: 300 kg/cm$^2$, pressing time: 1 minute

After the pressing, the mold was cooled to nearly room temperature with ice water and, subsequently, the sheet was taken out and about 0.4 g of sheet was sealed into the following measuring container.

Measuring container: aluminum PAN (DSC PANS 10 μl BO-14-3015) aluminum COVER (DSC COVER BO14-3003)

(Measuring condition)

First step: temperature was raised to 240°C at 30°C/min, followed by keeping for 10 minutes.
Second step: temperature was lowered to 30°C at 10°C/min.
Third step: temperature was raised to 240°C at 10°C/min. [m2] Amount of graft

About 2g of modified propylene resin was taken and was dissolved through heating into 500 ml of boiling p-xylene completely. The p-xylene solution containing the modified propylene resin was transferred to a 2-L beaker, and was stood for cooling in a 23°C atmosphere for about 1 hour. Thereafter, 1,200 ml of acetone was added to the above-described beaker, and polymer was deposited with agitation. Deposits were filtrated and dried, so as to obtain a refined product of the modified propylene resin, from which ungrafted portions had been removed. The FT-IR measurement of a press film made of the resulting refined product was conducted, and the amount of maleic anhydride grafted in polypropylene was calculated on a percent by weight basis from the intensity ratio of the 1,790 $cm^{-1}$ peak to the 974 $cm^{-1}$ peak.

[m3] Cross fractionation chromatography measurement (CFC)

Regarding the cross fractionation chromatography measurement of the modified propylene resin, the measurement of the amount of components soluble into o-dichlorobenzene at 70°C was conducted through cross fractionation chromatography measurement (CFC).

Regarding CFC, the measurement was conducted under the following condition by using the following apparatus provided with a temperature rising elution fractionation (TREF) portion to conduct composition fractionation and a GPC portion to conduct molecular weight fractionation, and the amounts at individual temperatures were calculated.

Measuring apparatus: CFC Model T-150A, produced by Mitsubishi Petrochemical Co., Ltd.
Column: Shodex AT-806MS (× 3 units)
Solvent: o-dichlorobenzene
Flow rate: 1.0 ml/min
Sample concentration: 0.3 percent by weight/percent by volume (containing 0.1% BHT)
Amount of injection: 0.5 ml
Solubility: complete dissolution
Detector: infrared absorption detection method, 3.42 μ (2,924 $cm^{-1}$), NaCl plate
Elution temperature: 0 to 135°C, 28 fractions 0, 10, 20, 30, 40, 45, 50, 55, 60, 65, 70, 75, 80, 85, 90, 94, 97, 100, 103, 106, 109, 112, 115, 118, 121, 124, 127, 135 (°C)

The measurement will be described in detail. The sample was heated at 145°C for 2 hours so as to be dissolved, followed by keeping at 135°C. Thereafter, the temperature was lowered to 0°C at 10°C/hr, and was kept at 0°C for 60 minutes, so that coating with the sample was conducted. The temperature rising elution column volume was 0.83 ml, and the pipe volume was 0.07 ml. As for a detector, an infrared spectrometer MIRAN 1A Model CVF ($CaF_2$ cell) produced by FOXBORO was used, and infrared light at 3.42 μm (2,924 $cm^{-1}$) was detected under the settings of the response time of 10 seconds in the absorbance mode. The elution temperature from 0°C to 135°C was divided into 28 fractions. All temperatures were indicated in integers. For example, an elution fraction of 94°C refers to components eluted at 91°C to 94°C. The molecular weights of the component, with which coating did not conducted at 0°C, and fractions eluted at individual temperatures were measured, and the molecular weight in terms of polypropylene was determined by using a general-purpose calibration curve. The SEC temperature was 135°C, the amount of injection of internal standard was 0.5 ml, the injection position was 3.0 ml, and the data sampling time was 0.50 seconds. Data was processed with an analytical program "CFC data processing (version 1.50)" attached to the apparatus.

[m4] Intrinsic viscosity [η]

The measurement was conducted at 135°C by using a decalin solution. About 20 mg of sample was dissolved into 15 ml of decalin, and the specific viscosity ηsp was measured in an oil bath at 135°C. After 5 ml of decalin was

added to this decalin solution so as to dilute, the specific viscosity ηsp was measured likewise. This dilution operation was further repeated two times, the concentration (C) was extrapolated to 0, and the value of ηsp/C at that time was determined as the intrinsic viscosity.

$$[\eta] = \lim(\eta sp/C)\ (C \rightarrow 0)$$

[m5] Amount of chlorine

After 0.8 g of polypropylene was burnt at 400°C to 900°C in an argon/oxygen stream with a burning apparatus produced by Mitsubishi Kasei Corporation, the combustion gas was collected with ultrapure water. Subsequently, concentrated sample solution was measured with Model DIONEX-DX300 ion chromatograph produced by Nippon Dionex K.K., through the use of an anionic column AS4A-SC (produced by Dionex Corporation).

[m6] Double bond structure in propylene polymer

The double bond structures shown in Fig. 2 were analyzed as the number of bonds relative to the carbon numbers of 1,000 (1,000C) through the use of H-NMR according to the method described in Polymer2004, No. 45, P2883-2888. In Fig. 2, A shows terminal vinyl, B shows terminal vinylidene, C shows internal vinylidene, D shows internal disubstitution, and E shows internal trisubstitution.

[m7] Measurement of proportion of 2,1-insertion and proportion of 1,3-insertion in propylene polymer

The proportion of 2,1-insertion and the proportion of 1,3-insertion of propylene were measured through the use of $^{13}C$-NMR according to the method described in Japanese Unexamined Patent Application Publication No. 7-145212.

[m8] Measurement of Mw/Mn [weight average molecular weight (Mw), number average molecular weight (Mn)]

The measurement was conducted as described below through the use of GPC-150C Plus produced by Waters Corporation. The separation columns were TSKgel GMH6-HT and TSKgel GMH6-HTL. Each column size was an inner diameter of 7.5 mm and a length of 600 mm. The column temperature was specified to be 140°C, o-dichlorobenzene (Wako Pure Chemical Industries, Ltd.) was used as a moving phase, 0.025 percent by weight of BHT (Wako Pure Chemical Industries, Ltd.) was used as an antioxidant, and movement was conducted at 1.0 ml/min. The sample concentration was specified to be 0.1 percent by weight, the amount of injection of the sample was specified to be 500 microliters, and a differential refractometer was used as a detector. The standard polystyrene used was produced by Tosoh Corporation in the case where $Mw < 1{,}000$ and $Mw > 4 \times 10^6$ and was produced by Pressure Chemical Company in the case where $1{,}000 \leq Mw \leq 4 \times 10^6$, and conversion to PP was conducted by using a general-purpose calibration method. In this regard, as for the Mark-Houwink coefficients of PS and PP, the values described in documents (J. Polym. Sci., Part A-2, 8, 1803 (1970) and Markomol. Chem., 177, 213 (1976), respectively) were used.

[m9] MFR (melt flow rate)

The MFRs of the propylene homopolymer and the modified propylene resin were measured according to ASTM D1238 (230°C, load 2.16 kg).

[m11] Metal analysis

The sample was weighed accurately into a clean container and was treated together with ultra-high purity nitric acid by a microwave decomposition method. Quantification of Ti and Zr in the resulting decomposition solution was conducted by an ICP-MS method.

[ICP-MS apparatus]: HP-4500, Agilent Technologies, Inc. [m12] Vibration fatigue test condition

The vibration fatigue test of the resin composition made from long fiber GF-PP master pellets, the propylene homopolymer, and the modified propylene resin was conducted under the following condition.
Test piece shape: refer to Fig. 1 (thickness 3.9 mm, width 9.9 mm)
Temperature: 23°C, frequency: 30 HZ, stress: 15 MPa, 20 MPa (tensile deformation)
Distance of chuck: 60 mm

[m 13] Tensile test

The tensile test was conducted according to JIS K7162-BA, and the yield strength and the tensile elongation at break were measured.

<Measuring condition>

Test piece: JIS K7162-BA dumbbell
5 mm (width) × 2 mm (thickness) × 75 mm (length) Pulling rate: 20 mm/min
Distance of span: 58 mm

[m14] Heat deformation temperature (HDT)

The heat deformation temperature was measured under the following condition according to JIS K 7191.

<Measuring condition>

Test piece: 10 mm (width) × 4 mm (thickness) × 80 mm (length)
Load: 0.45 MPa

[m15] Bending test

The bending test was conducted according to JIS K7171, and the bending strength was measured.

<Measuring condition>

Test piece: 10 mm (width) × 4 mm (thickness) × 80 mm (length)
Bending rate: 2 mm/min
Bending span: 64 mm

[Production example 1]

(1) Production of solid catalyst carrier

A slurry was prepared by sampling 300 g of $SiO_2$ into a 1-L side-arm flask and putting 800 ml of toluene therein. Subsequently, the slurry was transferred to a 5-L four-neck flask, 260 mL of toluene was added, and 2,830 mL of methylaluminoxane (hereafter referred to as MAO)-toluene solution (10 percent by weight solution) was introduced. Agitation was conducted for 30 minutes while room temperature was kept. Temperature was raised to 110°C over 1 hour, and reaction was effected for 4 hours. After the reaction was completed, cooling was conducted to room temperature. After the cooling, a supernatant toluene was drawn and substitution was conducted with fresh toluene until the substitution rate reached 95%.

(2) Production of solid catalyst (supporting of metal catalyst component with carrier)

In a globe box, 2.0 g of isopropyl(3-t-butyl-5-methylcyclopentadienyl)(3,6-di-t-butylfluorenyl)zirconium dichloride was weighed into a 5-L four-neck flask. The flask was taken out, 0.46 liter of toluene and 1.4 liter of MAO/$SiO_2$/toluene slurry prepared in the item (1) were added in nitrogen, and agitation was conducted for 30 minutes so as to effect supporting. The resulting isopropyl(3-t-butyl-5-methylcyclopentadienyl)(3,6-di-t-butylfluorenyl)zirconium dichlo-

ride/MAO/$SiO_2$/toluene slurry was substituted with n-heptane by 99%, and a final amount of slurry was specified to be 4.5 liter. This operation was conducted at room temperature.

(3) Production of prepolymerization catalyst

In an autoclave having an internal volume of 200 L with an agitator, 404 g of solid catalyst component prepared in the above-described item (2), 218 mL of triethylaluminum, and 100 L of heptane were placed. The internal temperature was kept at 15°C to 20°C, 1,212 g of ethylene was placed, and the reaction was effected for 180 minutes with agitation. After the polymerization was completed, solid components were settled, and removal of a supernatant liquid and washing with heptane were conducted two times. The resulting prepolymerization catalyst was suspended in refined heptane again, and adjustment was conducted with heptane in such a way that the solid catalyst component concentration became 6 g/L. The resulting prepolymerization catalyst contained 3 g of polyethylene per gram of solid catalyst component.

(4) Full-scale polymerization

Polymerization was conducted in the state of being filled with a liquid in such a way that no gas phase was present by supplying 35 kg/hour of propylene, 2.5 NL/hour of hydrogen, 42 g/hour of catalyst slurry, serving as a solid catalyst component, produced in the item (3), and 8.0 ml/hour of triethylaluminum continuously into a circulation type tubular polymerizer having an internal volume of 58 L with a jacket. The temperature of the tubular polymerizer was 30°C and the pressure was 3.1 MPa/G. The resulting slurry was transferred to a vessel polymerizer having an inner volume of 1,000 L with an agitator and polymerization was further effected. Regarding the polymerizer, 65 kg/hour of propylene was supplied, and hydrogen was supplied in such a way that the hydrogen concentration in the gas phase became 0.05 percent by mole. Polymerization was conducted at a polymerization temperature of 70°C and a pressure of 3.0 MPa/G.

The resulting slurry was transferred to a vessel polymerizer having an inner volume of 500 L with an agitator and polymerization was further effected. Regarding the polymerizer, 15 kg/hour of propylene was supplied, and hydrogen was supplied in such a way that the hydrogen concentration in the gas phase became 0.05 percent by mole. Polymerization was conducted at a polymerization temperature of 68°C and a pressure of 2.9 MPa/G.

The resulting propylene polymer (A-1) was vacuum-dried at 80°C.

[Production example 2]

Production was conducted in a manner similar to that in Production example 1 except that a polymerization method was changed as described below.

(1) Full-scale polymerization

Polymerization was conducted in the state of being filled with a liquid in such a way that no gas phase was present by supplying 35 kg/hour of propylene, 2.5 NL/hour of hydrogen, 26 g/hour of catalyst slurry, serving as a solid catalyst component, produced in the item (3), and 8.0 ml/hour of triethylaluminum continuously into a circulation type tubular polymerizer having an internal volume of 58 L with a jacket. The temperature of the tubular polymerizer was 30°C and the pressure was 3.1 MPa/G. The resulting slurry was transferred to a vessel polymerizer having an inner volume of 1,000 L with an agitator and polymerization was further effected. Regarding the polymerizer, 80 kg/hour of propylene was supplied, and hydrogen was supplied in such a way that the hydrogen concentration in the gas phase became 0.07 percent by mole. Polymerization was conducted at a polymerization temperature of 70°C and a pressure of 3.0 MPa/G.

The resulting slurry was transferred to a vessel polymerizer having an inner volume of 500 L with an agitator and polymerization was further effected. Regarding the polymerizer, 15 kg/hour of propylene was supplied, and hydrogen was supplied in such a way that the hydrogen concentration in the gas phase became 0.07 percent by mole. Polymerization was conducted at a polymerization temperature of 68°C and a pressure of 2.9 MPa/G.

The resulting propylene polymer (A-2) was vacuum-dried at 80°C.

[Production example 3]

Production was conducted in a manner similar to that in Production example 1 except that a polymerization method was changed as described below.

(1) Full-scale polymerization

Polymerization was conducted in the state of being filled with a liquid in such a way that no gas phase was present by supplying 35 kg/hour of propylene, 2.5 NL/hour of hydrogen, 19 g/hour of catalyst slurry, serving as a solid catalyst component, produced in the item (3), and 8.0 ml/hour of triethylaluminum continuously into a circulation type tubular polymerizer having an internal volume of 58 L with a jacket. The temperature of the tubular polymerizer was 30°C and the pressure was 3.1 MPa/G. The resulting slurry was transferred to a vessel polymerizer having an inner volume of 1,000 L with an agitator and polymerization was further effected. Regarding the polymerizer, 85 kg/hour of propylene was supplied, and hydrogen was supplied in such a way that the hydrogen concentration in the gas phase became 0.10 percent by mole. Polymerization was conducted at a polymerization temperature of 70°C and a pressure of 3.0 MPa/G.

The resulting slurry was transferred to a vessel polymerizer having an inner volume of 500 L with an agitator and polymerization was further effected. Regarding the polymerizer, 15 kg/hour of propylene was supplied, and hydrogen was supplied in such a way that the hydrogen concentration in the gas phase became 0.10 percent by mole. Polymerization was conducted at a polymerization temperature of 68°C and a pressure of 2.9 MPa/G.

The resulting propylene polymer (A-3) was vacuum-dried at 80°C.

[Production example 4]

(1) Production of solid catalyst carrier

A slurry was prepared by putting 27 L of toluene and 7.5 kg of $SiO_2$ (CARiACT P10 produced by Fuji Silysia Chemical Ltd.) into a reaction vessel having an inner volume of 200 L with an agitator. Subsequently, the temperature in the vessel was kept at 0°C to 5°C, 73 L of MAO-toluene solution (10 percent by weight solution) was introduced over 30 minutes, and agitation was conducted for 30 minutes. Temperature was raised to 95°C over 1 hour, and reaction was effected for 4 hours. After the reaction was completed, cooling was conducted to 60°C. After the cooling, a supernatant toluene was drawn and substitution was conducted with fresh toluene until the substitution rate reached 95%.

(2) Production of solid catalyst (supporting of metal catalyst component with carrier)

A reaction vessel having an inner volume of 14 L with an agitator was allowed to contain 7.9 L (1,030 g in terms of solid component) of MAO/$SiO_2$/toluene slurry prepared in the item (1), and the temperature was kept at 30°C to 35°C with agitation. In a globe box, 10.3 g of [3-(1',1',4',4',7',7',10',10'-octamethyloctahydrodibenzo[b,h]fluorenyl)(1,1,3-trimethyl-5-tert-butyl-1,2,3,3a-tetrahydropentalene)]zirconium dichloride was weighed into a 1-L flask. The flask was taken out, and dilution was conducted with 0.5 liter of toluene. The resulting liquid was added to the reaction vessel, and toluene was added until the amount of liquid in the reaction vessel reached 10 L. Agitation was conducted for 60 minutes so as to effect supporting. The resulting [3-(1',1',4',4',7',7',10',10'-octamethyloctahydrodibenzo[b,h]fluorenyl)(1,1,3-trimethyl-5-tert-butyl-1,2,3,3a-tetrahydropentalene)]zirconium dichloride/MAO/$SiO_2$/toluene slurry was cooled to room temperature and, thereafter, substitution with n-heptane was conducted by 92%, so that a final amount of slurry was specified to be 10 liter.

(3) Production of prepolymerization catalyst

Liquid-transferring of 1,040 g of solid catalyst component prepared in the above-described item (2) to an autoclave having an internal volume of 200 L with an agitator and containing 18 L of n-heptane in advance. The internal temperature was kept at 15°C to 20°C, 554 g of triisobutylaluminum was put in, and the amount of liquid was adjusted to be 62 L with n-heptane. While keeping at 30°C to 35°C with agitation, 3,120 g of ethylene was placed at 630 g/hour, and the reaction was effected for 300 minutes with agitation. After the polymerization was completed, solid components were settled, and removal of a supernatant liquid and washing with heptane were conducted two times. The resulting prepolymerization catalyst was suspended in refined heptane again, and adjustment was conducted with heptane in such a way that the solid catalyst component concentration became 8 g/L. The resulting prepolymerization catalyst contained 3 g of polyethylene per gram of solid catalyst component.

(4) Full-scale polymerization

Polymerization was conducted in the state of being filled with a liquid in such a way that no gas phase was present by supplying 35 kg/hour of propylene, 2.5 NL/hour of hydrogen, 19 g/hour of catalyst slurry, serving as a solid catalyst component, produced in the item (3), and 8 ml/hour of triethylaluminum continuously into a circulation type

tubular polymerizer having an internal volume of 58 L with a jacket. The temperature of the tubular polymerizer was 70°C and the pressure was 3.1 MPa/G.

The resulting slurry was transferred to a vessel polymerizer having an inner volume of 1,000 L with an agitator and polymerization was further effected. Regarding the polymerizer, 85 kg/hour of propylene was supplied, and hydrogen was supplied in such a way that the hydrogen concentration in the gas phase became 0.11 percent by mole. Polymerization was conducted at a polymerization temperature of 70°C and a pressure of 3.0 MPa/G.

The resulting slurry was transferred to a vessel polymerizer having an inner volume of 500 L with an agitator and polymerization was further effected. Regarding the polymerizer, 15 kg/hour of propylene was supplied, and hydrogen was supplied in such a way that the hydrogen concentration in the gas phase became 0.11 percent by mole. Polymerization was conducted at a polymerization temperature of 68°C and a pressure of 2.9 MPa/G.

The resulting propylene polymer was vacuum-dried at 80°C.

[Production example 5]

Production was conducted in a manner similar to that in Production example 4 except that a polymerization method was changed as described below.

(1) Full-scale polymerization

Polymerization was conducted in the state of being filled with a liquid in such a way that no gas phase was present by supplying 35 kg/hour of propylene, 2.5 NL/hour of hydrogen, 13 g/hour of catalyst slurry, serving as a solid catalyst component, produced in Production example 4(3), and 8 ml/hour of triethylaluminum continuously into a circulation type tubular polymerizer having an internal volume of 58 L with a jacket. The temperature of the tubular polymerizer was 70°C and the pressure was 3.1 MPa/G. The resulting slurry was transferred to a vessel polymerizer having an inner volume of 1,000 L with an agitator and polymerization was further effected. Regarding the polymerizer, 85 kg/hour of propylene was supplied, and hydrogen was supplied in such a way that the hydrogen concentration in the gas phase became 0.17 percent by mole. Polymerization was effected at a polymerization temperature of 70°C and a pressure of 3.0 MPa/G.

The resulting slurry was transferred to a vessel polymerizer having an inner volume of 500 L with an agitator and polymerization was further effected. Regarding the polymerizer, 15 kg/hour of propylene was supplied, and hydrogen was supplied in such a way that the hydrogen concentration in the gas phase became 0.17 percent by mole. Polymerization was effected at a polymerization temperature of 68°C and a pressure of 2.9 MPa/G.

The resulting propylene polymer was vacuum-dried at 80°C.

[Production example 6]

(1) Production of prepolymerization catalyst

In a vessel polymerizer having an inner volume of 20 L with an agitator, 14 L of refined heptane and 490 g of diethylaluminum chloride were added and 70 g of commercially available Solvay type titanium trichloride catalyst (produced by TOSOH FINECHEM CORPORATION) was added. The internal temperature was kept at 20°C, propylene was placed continuously, and a reaction was effected for 80 minutes. After the polymerization was completed, solid components were settled, and removal of a supernatant liquid and washing with heptane were conducted two times. The resulting prepolymerization catalyst was suspended in refined heptane again, and adjustment was conducted with heptane in such a way that the solid catalyst component concentration became 10 g/L. The resulting prepolymerization catalyst contained 3 g of polypropylene per gram of solid catalyst component.

(2) Full-scale polymerization

In a vessel polymerizer having an inner volume of 275 L with an agitator, 120 L of refined heptane and 210 g of diethylaluminum chloride were added and 30 g of solid catalyst component prepared in the item (1) was charged. The polymerization temperature was kept at 60°C, the polymerization pressure was kept at 0.68 MPa/G, and propylene was fed for 4 hours continuously. Hydrogen was supplied in such a way that the hydrogen concentration in the gas phase became 0.07 percent by mole.

All amount of the resulting polypropylene slurry was liquid-transferred to an autoclave having an inner volume of 500 L with an agitator and 201 g of methanol was charged, so as to deactivate the catalyst. The resulting slurry was liquid-transferred to a filtration dryer with an agitator. After filtration was conducted, vacuum-drying was conducted at 85°C for 6 hours, so as to obtain a polypropylene polymer (A'-1).

Table 1 shows basic properties of the propylene polymers obtained in Production examples 1 to 6.

[Table 1]

| | | Production example 1 | Production example 2 | Production example 3 | Production example 4 | Production example 5 | Production example 6 |
|---|---|---|---|---|---|---|---|
| Propylene homopolymer | | A-1 | A-2 | A-3 | A-4 | A-5 | A'-1 |
| Tm | °C | 156 | 156 | 156 | 156 | 156 | 160 |
| MFR | g/ 10min | 0.9 | 3 | 6 | 6 | 17 | 0.5 |
| Mw/Mn | | 2.3 | 2.2 | 2.2 | 2.2 | 2.2 | 7.7 |
| Terminal vinyl | bond/ 1000C | 0 | 0 | 0 | 0 | 0 | 0 |
| Terminal vinylidene | | 0.2 | 0.1 | 0.1 | 0.3 | 0.1 | 0 |
| Internal vinylidene | | 0.2 | 0.1 | 0.1 | 0.1 | 0.1 | 0 |
| Internal disubstitution | | 0 | 0 | 0 | 0.1> | 0 | 0 |
| Internal trisubstitution | | 0.1 | 0.1> | 0 | 0.1 | 0 | 0 |
| Amount of 2,1-insertion bond | mol% | 0 | 0 | 0 | 0 | 0 | 0 |
| Amount of 1,3-insertion bond | | 0 | 0 | 0 | 0 | 0 | 0 |
| Residual chlorine | ppm | <1 | <1 | <1 | <1 | <1 | 29 |

[Example 1]

Compounding of 100 parts by weight of propylene homopolymer (A-1) produced in Production example 1 with 0.5 parts by weight of maleic anhydride (analytical grade reagent, produced by Wako Pure Chemical Industries, Ltd.) serving as the ethylenic unsaturated bond-containing monomer (B), 0.5 parts by weight of t-butylperoxybenzoate (PERBUTYL Z, trademark, NOF CORPORATION) (C-1) serving as the organic peroxide, 0.1 parts by weight of heat stabilizer IRGANOX1010 (trademark, Ciba Geigy), and 0.1 parts by weight of heat stabilizer YOSHINOX BHT (trademark, Yoshitomi Fine Chemicals, Ltd.) was conducted, and blending was conducted for 3 minutes with a Henschel mixer. The resulting blend was melt-kneaded under the following condition with a twin screw extruder, so as to effect a graft reaction. After the reaction was completed, a modified propylene resin (D-1) was produced through granulation. The properties of the modified propylene resins are shown in Table 2. Furthermore, Table 2 shows the amount of grafts and the amount of dissolution of components into dichlorobenzene at 70°C after the modified propylene resin was washed with hot xylene.

<Melt-kneading condition>

Co-rotation twin screw kneader: Product No. KZW31-30HG, produced by TECHNOVEL CORPORATION
Kneading temperature: 210°C
Number of revolutions of screw: 200 rpm
Number of revolutions of feeder: 80 rpm

[Example 2]

Production was conducted as in Example 1 except that maleic anhydride was changed to 1.0 part by weight and t-butylperoxybenzoate (C-1) was changed to 1.0 part by weight in Example 1. The properties of the resulting modified propylene resin (D-2) are shown in Table 2. Furthermore, Table 2 shows the amount of grafts and the amount of dissolution of components into dichlorobenzene at 70°C after the modified propylene resin was washed with hot xylene.

[Example 3]

Production was conducted in the same manner except that maleic anhydride was changed to 1.5 parts by weight and t-butylperoxybenzoate (C-1) was changed to 1.5 parts by weight in Example 1. The properties of the resulting modified propylene resin (D-3) are shown in Table 2. Furthermore, Table 2 shows the amount of grafts and the amount of dissolution of components into dichlorobenzene at 70°C after the modified propylene resin was washed with hot xylene.

[Example 4]

Production was conducted as in Example 1 except that maleic anhydride was changed to 2 parts by weight and t-butylperoxybenzoate (C-1) was changed to 2 parts by weight in Example 1. The properties of the resulting modified propylene resin (D-4) are shown in Table 2. Furthermore, Table 2 shows the amount of grafts and the amount of dissolution of components into dichlorobenzene at 70°C after the modified propylene resin was washed with hot xylene.

[Example 5]

Production was conducted as in Example 1 except that the propylene homopolymer (A-2) produced in Production example 2 was used instead of the propylene homopolymer (A-1), maleic anhydride was changed to 1 part by weight, and t-butylperoxybenzoate (C-1) was changed to 1 part by weight in Example 1. The properties of the resulting modified propylene resin (D-5) are shown in Table 2. Furthermore, Table 2 shows the amount of grafts and the amount of dissolution of components into dichlorobenzene at 70°C after the modified propylene resin was washed with hot xylene.

[Example 6]

Production was conducted as in Example 1 except that the propylene homopolymer (A-3) produced in Production example 3 was used instead of the propylene homopolymer (A-1), maleic anhydride was changed to 1 part by weight, and t-butylperoxybenzoate (C-1) was changed to 1 part by weight in Example 1. The properties of the resulting modified propylene resin (D-6) are shown in Table 2. Furthermore, Table 2 shows the amount of grafts and the amount of dissolution of components into dichlorobenzene at 70°C after the modified propylene resin was washed with hot xylene.

[Example 7]

Production was conducted as in Example 1 except that the propylene homopolymer (A-4) produced in Production example 4 was used instead of the propylene homopolymer (A-1) in Example 1. The properties of the resulting modified propylene resin (D-7) are shown in Table 2. Furthermore, Table 2 shows the amount of grafts and the amount of dissolution of components into dichlorobenzene at 70°C after the modified propylene resin was washed with hot xylene.

[Example 8]

Production was conducted as in Example 1 except that the propylene homopolymer (A-4) produced in Production example 4 was used instead of the propylene homopolymer (A-1), maleic anhydride was changed to 1 part by weight, and t-butylperoxybenzoate (C-1) was changed to 1 part by weight in Example 1. The properties of the resulting modified propylene resin (D-8) are shown in Table 2. Furthermore, Table 2 shows the amount of grafts and the amount of dissolution of components into dichlorobenzene at 70°C after the modified propylene resin was washed with hot xylene.

[Example 9]

Production was conducted as in Example 1 except that the propylene homopolymer (A-5) produced in Production example 5 was used instead of the propylene homopolymer (A-1) in Example 1. The properties of the resulting modified propylene resin (D-9) are shown in Table 2. Furthermore, Table 2 shows the amount of grafts and the amount of dissolution of components into dichlorobenzene at 70°C after the modified propylene resin was washed with hot xylene.

[Comparative example 1]

Compounding of 100 parts by weight of propylene homopolymer (A'-1) produced in Production example 6 with 0.5 parts by weight of maleic anhydride (analytical grade reagent, produced by Wako Pure Chemical Industries, Ltd.) serving as the ethylenic unsaturated bond-containing monomer (B), 0.5 parts by weight of t-butylperoxybenzoate (PERBUTYL Z, trademark, NOF CORPORATION) (C-1) serving as the organic peroxide, 0.1 parts by weight of heat stabilizer IRGANOX1010 (trademark, Ciba Geigy), and 0.1 parts by weight of heat stabilizer YOSHINOX BHT (trademark, Yoshitomi Fine Chemicals, Ltd.) was conducted, and blending was conducted for 3 minutes with a Henschel mixer. The resulting blend was melt-kneaded under the following condition with a twin screw extruder, so as to effect a graft reaction. After the reaction was completed, a modified propylene resin (D'-1) was produced through granulation. The properties of the modified propylene resins are shown in Table 2. Furthermore, Table 2 shows the amount of grafts and the amount of dissolution of components into dichlorobenzene at 70°C after the modified propylene resin was washed with hot xylene.

<Melt-kneading condition>

Co-rotation twin screw kneader: Product No. KZW31-30HG, produced by TECHNOVEL CORPORATION
Kneading temperature: 210°C
Number of revolutions of screw: 200 rpm
Number of revolutions of feeder: 80 rpm

[Comparative example 2]

Production was conducted as in Comparative example 1 except that maleic anhydride was changed to 1 part by weight and t-butylperoxybenzoate (C-1) was changed to 1 part by weight in Comparative example 1. The properties of the resulting modified propylene resin (D'-2) are shown in Table 2. Furthermore, Table 2 shows the amount of grafts and the amount of dissolution of components into dichlorobenzene at 70°C after the modified propylene resin was washed with hot xylene.

[Comparative example 3]

Production was conducted as in Comparative example 1 except that maleic anhydride was changed to 2 parts by weight and t-butylperoxybenzoate (C-1) was changed to 2 parts by weight in Comparative example 1. The properties of the resulting modified propylene resin are shown in Table 2. Furthermore, Table 2 shows the amount of grafts and the amount of dissolution of components into dichlorobenzene at 70°C after the modified propylene resin was washed with hot xylene.

[Table 2]

| | | | Example 1 | Example 2 | Example 3 | Example 4 | Example 5 |
|---|---|---|---|---|---|---|---|
| Propylene homopolymer (A-1) | | parts by weight | 100 | 100 | 100 | 100 | |
| Propylene homopolymer (A-2) | | parts by weight | | | | | 100 |
| Propylene homopolymer (A-3) | | parts by weight | | | | | |
| Propylene homopolymer (A-4) | | | | | | | |
| Propylene homopolymer (A-5) | | | | | | | |
| Propylene homopolymer (A'-1) | | parts by weight | | | | | |
| Maleic anhydride | | parts by weight | 0.5 | 1.0 | 1.5 | 2.0 | 1.0 |
| Organic peroxide (C1) | | parts by weight | 0.5 | 1.0 | 1.5 | 2.0 | 1.0 |
| Name of modified propylene resin | | | D-1 | D-2 | D-3 | D-4 | D-5 |
| Pellet (before refining) | Tm | °C | 154 | 151 | 148 | 146 | 152 |
| | MFR | g/10min | 190 | 470 | 830 | 1280 | 590 |
| | [η] | dl/g | 0.96 | 0.78 | 0.71 | 0.65 | 0.75 |
| | Amount of dissolution into o-dichlorobenzene at 70°C | wt% | 0.1 | 0.1 | 0.3 | 0.9 | 0.1 |
| | Residual chlorine | ppm | <1 | <1 | <1 | <1 | <1 |
| | Amount of Ti | ppm | 0.1> | 0.1> | 0.1> | 0.1> | 0.1> |
| | Amount of Zr | ppm | 0.4 | 0.4 | 0.4 | 0.4 | 0.4 |
| After refining | Amount of graft | wt% | 0.4 | 0.8 | 1.1 | 1.4 | 0.7 |
| | Amount of dissolution into o-dichlorobenzene at 70°C | wt% | 0.1 | 0.1 | 0.2 | 0.8 | 0.1 |

| | | | Example 6 | Example 7 | Example 8 | Example 9 |
|---|---|---|---|---|---|---|
| Propylene homopolymer (A-1) | | parts by weight | | | | |
| Propylene homopolymer (A-2) | | parts by weight | | | | |
| Propylene homopolymer (A-3) | | parts by weight | 100 | | | |
| Propylene homopolymer (A-4) | | | | 100 | 100 | |
| Propylene homopolymer (A-5) | | | | | | 100 |
| Propylene homopolymer (A'-1) | | parts by weight | | | | |
| Maleic anhydride | | parts by weight | 1.0 | 0.5 | 1.0 | 0.5 |
| Organic peroxide (C1) | | parts by weight | 1.0 | 0.5 | 1.0 | 0.5 |
| Name of modified propylene resin | | | D-6 | D-7 | D-8 | D-9 |
| Pellet (before refining) | Tm | °C | 152 | 153 | 150 | 153 |
| | MFR | g/10min | 700 | 274 | 790 | 420 |
| | [η] | dl/g | 0.74 | 0.86 | 0.72 | 0.79 |
| | Amount of dissolution into o-dichlorobenzene at 70°C | wt% | 0.1 | 0.1 | 0.3 | 0.1 |
| | Residual chlorine | ppm | <1 | <1 | <1 | <1 |
| | Amount of Ti | ppm | 0.1> | 0.1> | 0.1> | 0.1> |
| | Amount of Zr | ppm | 0.4 | 0.1> | 0.1> | 0.1> |
| After refining | Amount of graft | wt% | 0.7 | 0.4 | 0.8 | 0.5 |
| | Amount of dissolution into o-dichlorobenzene at 70°C | wt% | 0.1 | 0.1 | 0.2 | 0.1 |

| | | | Comparative example 1 | Comparative example 2 | Comparative example 3 |
|---|---|---|---|---|---|
| Propylene homopolymer (A-1) | | parts by weight | | | |
| Propylene homopolymer (A-2) | | parts by weight | | | |
| Propylene homopolymer (A-3) | | parts by weight | | | |
| Propylene homopolymer (A-4) | | | | | |
| Propylene homopolymer (A-5) | | | | | |
| Propylene homopolymer (A'-1) | | parts by weight | 100 | 100 | 100 |
| Maleic anhydride | | parts by weight | 0.5 | 1.0 | 2.0 |
| Organic peroxide (C1) | | parts by weight | 0.5 | 1.0 | 2.0 |
| Name of modified propylene resin | | | D'-1 | D'-2 | D'-3 |
| Pellet (before refining) | Tm | °C | 156 | 153 | 148 |
| | MFR | g/10min | 220 | 500 | 1720 |
| | [η] | dl/g | 0.94 | 0.75 | 0.61 |
| | Amount of dissolution into o-dichlorobenzene at 70°C | wt% | 4.5 | 4.8 | 9.0 |
| | Residual chlorine | ppm | 35 | 36 | 35 |
| | Amount of Ti | ppm | 5 | 5 | 5 |
| | Amount of Zr | ppm | 0.1> | 0.1> | 0.1> |
| After refining | Amount of graft | wt% | 0.4 | 0.7 | 1.2 |
| | Amount of dissolution into o-dichlorobenzene at 70°C | wt% | 3.8 | 4.2 | 8.1 |

[Production example 7] Production of long fiber GF-PP master pellet (F-1)

A molten resin was supplied from an extruder into an impregnation nozzle disposed at an end of the extruder while a bundle of several thousands of continuous glass fibers was passed through and, thereby, the glass fiber bundle was impregnated with the molten resin. Thereafter, the glass fiber bundle was drawn through the nozzle and was pelletized into a predetermined length, so that long fiber GF-PP master pellets were able to be produced.

As for the impregnation resin, a propylene homopolymer (J-3000GV produced by Prime Polymer Co., Ltd.) was used. As for the glass fiber bundle, ER2220 (produced by Owens Corning Corporation, the number of glass bundled 4,000, treated with amino silane coupling agent) was used. The amount of glass fibers was adjusted to be 50 percent by weight, the pellet length was adjusted to be 8 mm and, thereby, long fiber GF-PP master pellets (E-1) were produced.

[Example 10]

Dry blending of 100 parts by weight in total of 80 parts by weight of long fiber GF-PP master pellets (F-1), 12 parts by weight of propylene homopolymer (MFR = 30 g/10 min) (J-3000GV produced by Prime Polymer Co., Ltd.) (A'-2), and 2 parts by weight of modified propylene resin (D-1) was conducted, and an injection molded product was produced with an injection molding machine (IS100EN produced by TOSHIBA MACHINE CO., LTD.). A vibration fatigue test of the resulting injection molded product was conducted. The data of the number at break due to vibration fatigue test are shown in Table 3.

<Forming condition>

Forming temperature: 240°C
Mold temperature: 45°C
Injection + pressure keeping time: 15 seconds
Cooling time: 30 seconds

[Example 11]

A test was conducted as in Example 10 except that the modified propylene resin (D-2) was used instead of the modified propylene resin (D-1) in Example 10. The data of the number at break due to vibration fatigue test of the resulting injection molded product are shown in Table 3.

[Example 12]

A test was conducted as in Example 10 except that the modified propylene resin (D-8) was used instead of the modified propylene resin (D-1) in Example 10. The data of the number at break due to vibration fatigue test of the resulting injection molded product are shown in Table 3.

[Comparative example 4]

A test was conducted as in Example 10 except that the modified propylene resin (D'-1) was used instead of the modified propylene resin (D-1) in Example 10. The data of the number at break due to vibration fatigue test of the resulting injection molded product are shown in Table 3.

[Comparative example 5]

A test was conducted as in Example 10 except that the modified propylene resin (D'-2) was used instead of the modified propylene resin (D-1) in Example 10. The data of the number at break due to vibration fatigue test of the resulting injection molded product are shown in Table 3.

[Table 3]

| | | Example 10 | Example 11 | Example 12 | Comparative example 4 | Comparative example 5 |
|---|---|---|---|---|---|---|
| Long fiber GF-PP master pellet (F1) | parts by weight | 80 | 80 | 80 | 80 | 80 |
| Propylene homopolymer (A 2) | parts by weight | 18 | 18 | 18 | 18 | 18 |

(continued)

| | | | Example 10 | Example 11 | Example 12 | Comparative example 4 | Comparative example 5 |
|---|---|---|---|---|---|---|---|
| Modified propylene resin (D-1) | | parts by weight | 2 | | | | |
| Modified propylene resin (D-2) | | parts by weight | | 2 | | | |
| Modified propylene resin (D-8) | | parts by weight | | | 2 | | |
| Modified propylene resin (D'-1) | | parts by weight | | | | 2 | |
| Modified propylene resin (D'-2) | | parts by weight | | | | | 2 |
| Injection molded product | Number at break due to vibration fatigue (load 20 Mpa) | time | $9.2\times10^3$ | $1.1\times10^4$ | $8.8\times10^3$ | $6.8\times10^3$ | $7.4\times10^3$ |
| | Number at break due to vibration fatigue (load 15 Mpa) | time | $5.7\times10^5$ | $5.1\times10^5$ | $3.0\times10^5$ | $1.1\times10^5$ | $1.9\times10^5$ |

[Example 13]

Mixing of 88 parts by weight of propylene homopolymer (A'-3) (MFR = 9 g/10 min) (J105G, produced by Prime Polymer Co., Ltd.), 10 parts by weight of talc (F-2) (White Filler 5000PJ (trademark), produced by Matsumura Sangyo K.K.), 2 parts by weight of modified propylene resin (D-2) produced in Production example 2, 0.1 parts by weight of heat stabilizer IRGANOX1010 (trademark, Ciba Geigy), 0.1 parts by weight of heat stabilizer IRGAFOS168 (trademark, Ciba Geigy), and 0.1 parts by weight of calcium stearate was conducted with a tumbler. Thereafter, melt-kneading was conducted under the following condition with a twin screw extruder, so as to prepare a pellet-shaped propylene based resin composition. A test piece was formed from the propylene based resin composition under the following condition with an injection molding machine [Product No. EC40, produced by TOSHIBA MACHINE CO., LTD.]. The properties of the formed product are shown in Table 4.

<Melt-kneading condition>

Co-rotation twin screw kneader: Product No. NR-2, produced by Nakatani Machinery Ltd.
Kneading temperature: 210°C
Number of revolutions of screw: 200 rpm
Number of revolutions of feeder: 400 rpm

<Injection molding condition>

Injection molding machine: Product No. EC40, produced by TOSHIBA MACHINE CO., LTD.
Cylinder temperature: 210°C
Mold temperature: 40°C

[Comparative example 6]

Production was conducted as in Example 13 except that the modified propylene resin (D'-2) produced in Comparative example 2 was used instead of the modified propylene resin (D-2) in Example 13. The properties of the resulting injection molded product are shown in Table 4.

[Comparative example 7]

Mixing of 90 parts by weight of propylene homopolymer (A'-3) (MFR = 9 g/10 min) (J105G, produced by Prime Polymer Co., Ltd.), 10 parts by weight of talc (F-2) (White Filler 5000PJ (trademark), produced by Matsumura Sangyo K.K.), 0.1 parts by weight of heat stabilizer IRGANOX1010 (trademark, Ciba Geigy), 0.1 parts by weight of heat stabilizer IRGAFOS168 (trademark, Ciba Geigy), and 0.1 parts by weight of calcium stearate was conducted with a tumbler. Thereafter, melt-kneading was conducted with a twin screw extruder, so as to prepare a propylene based resin composition, as in Example 13. Subsequently, injection molding of the above-described propylene based resin composition was conducted. The properties of the resulting injection molded product are shown in Table 4.

[Table 4]

| | | | Example 13 | Comparative example 6 | Comparative example 7 |
|---|---|---|---|---|---|
| Propylene homopolymer (A'-3) | | parts by weight | 88 | 88 | 90 |
| Talc (F-2) | | parts by weight | 10 | 10 | 10 |
| Modified propylene resin (D-2) | | parts by weight | 2 | | |
| Modified propylene resin (D'-2) | | parts by weight | | 2 | |
| MFR | | g/10min | 8 | 8 | 10 |
| Injection molded product | Yield strength | MPa | 38 | 38 | 37 |
| | Elongation at break | % | 190 | 80 | 140 |
| | Heat deformation temperature (@0.45MPa) | °C | 124 | 123 | 120 |

[Example 14]

Mixing of 88 parts by weight of propylene homopolymer (A'-3) (MFR = 9 g/10 min) (J105G, produced by Prime Polymer Co., Ltd.), 10 parts by weight of basic magnesium sulfate (F-3) (Moshige (trademark), produced by Ube Material Industries, Ltd.), 2 parts by weight of modified propylene resin (D-2) produced in Production example 2, 0.1 parts by weight of heat stabilizer IRGANOX1010 (trademark, Ciba Geigy), 0.1 parts by weight of heat stabilizer IRGAFOS168 (trademark, Ciba Geigy), and 0.1 parts by weight of calcium stearate was conducted with a tumbler. Thereafter, melt-kneading was conducted under the following condition with a twin screw extruder, so as to prepare a pellet-shaped propylene based resin composition. A test piece was formed from the propylene based resin composition under the following condition with an injection molding machine [Product No. EC40, produced by TOSHIBA MACHINE CO., LTD.]. The properties of the formed product are shown in Table 5.

<Melt-kneading condition>

Co-rotation twin screw kneader: Product No. NR-2, produced by Nakatani Machinery Ltd.
Kneading temperature: 210°C
Number of revolutions of screw: 200 rpm
Number of revolutions of feeder: 400 rpm

<Injection molding condition>

Injection molding machine: Product No. EC40, produced by TOSHIBA MACHINE CO., LTD.
Cylinder temperature: 210°C
Mold temperature: 40°C

[Comparative example 8]

Production was conducted as in Example 14 except that the modified propylene resin (D'-2) produced in Comparative example 2 was used instead of the modified propylene resin (D-2) in Example 14. The properties of the resulting injection molded product are shown in Table 5.

[Comparative example 9]

Mixing of 90 parts by weight of propylene homopolymer (A'-3) (MFR = 9 g/10 min) (J105G, produced by Prime Polymer Co., Ltd.), 10 parts by weight of basic magnesium sulfate (F-3) (Moshige (trademark), produced by Ube Material Industries, Ltd.), 0.1 parts by weight of heat stabilizer IRGANOX1010 (trademark, Ciba Geigy), 0.1 parts by weight of heat stabilizer IRGAFOS168 (trademark, Ciba Geigy), and 0.1 parts by weight of calcium stearate was conducted with a tumbler. Thereafter, kneading was conducted with a twin screw extruder, so as to prepare a propylene based resin composition, as in Example 14. Subsequently, injection molding of the above-described propylene based resin composition was conducted. The properties of the resulting injection molded product are shown in Table 5.

[Table 5]

| | | | Example 14 | Comparative example 8 | Comparative example 9 |
|---|---|---|---|---|---|
| propylene homopolymer (A'-3) | | parts by weight | 88 | 88 | 90 |
| Moshige (F-3) | | parts by weight | 10 | 10 | 10 |
| Modified propylene resin (D-2) | | parts by weight | 2 | | |
| Modified propylene resin (D'-2) | | parts by weight | | 2 | |
| MFR | | g/10min | 7 | 8 | 10 |
| Injection molded product | Yield strength | MPa | 37 | 36 | 34 |
| | Heat deformation temperature (@0.45MPa) | °C | 119 | 116 | 107 |

[Example 15]

Mixing of 90 parts by weight of propylene homopolymer (A'-3) (MFR = 9 g/10 min) (J105G, produced by Prime Polymer Co., Ltd.), 5 parts by weight of chopped fiber carbon fiber (F-4) (epoxy resin sizing) (HTA-C6-SR (trademark), produced by Toho Tenax Co., Ltd.), 5 parts by weight of modified propylene resin (D-4) produced in Production example 4, 0.1 parts by weight of heat stabilizer IRGANOX1010 (trademark, Ciba Geigy), 0.1 parts by weight of heat stabilizer IRGAFOS168 (trademark, Ciba Geigy), and 0.1 parts by weight of calcium stearate was conducted with a tumbler. Thereafter, melt-kneading was conducted under the following condition with a single screw extruder, so as to prepare a pellet-shaped propylene based resin composition. A test piece was formed from the propylene based resin composition under the following condition with an injection molding machine [Product No. EC40, produced by TOSHIBA MACHINE CO., LTD.]. The properties of the formed product are shown in Table 6.

<Melt-kneading condition>

Single screw kneader: Product No. Labo Plastomill 10M100, produced by Toyo Seiki Seisaku-sho, Ltd.
Kneading temperature: 220°C
Number of revolutions of screw: 50 rpm
Pellet length: about 5 mm

<Injection molding condition>

Injection molding machine: Product No. EC40, produced by TOSHIBA MACHINE CO., LTD.
Cylinder temperature: 210°C
Mold temperature: 40°C

[Comparative example 10]

Production was conducted as in Example 15 except that the modified propylene resin (D'-3) produced in Comparative example 3 was used instead of the modified propylene resin (D-4) in Example 15. The properties of the resulting injection molded product are shown in Table 6.

[Comparative example 11]

Mixing of 95 parts by weight of propylene homopolymer (A'-3) (MFR = 9 g/10 min) (J105G, produced by Prime Polymer Co., Ltd.), 5 parts by weight of chopped fiber carbon fiber (F-4) (epoxy resin sizing) (HTA-C6-SR (trademark), produced by Toho Tenax Co., Ltd.), 0.1 parts by weight of heat stabilizer IRGANOX1010 (trademark, Ciba Geigy), 0.1 parts by weight of heat stabilizer IRGAFOS168 (trademark, Ciba Geigy), and 0.1 parts by weight of calcium stearate was conducted with a tumbler. Thereafter, melt-kneading was conducted with a single screw extruder, so as to prepare a propylene based resin composition, as in Example 15. Subsequently, injection molding of the above-described propylene based resin composition was conducted. The properties of the resulting injection molded product are shown in Table 6.

[Table 6]

| | | | Example 15 | Comparative example 10 | Comparative example 11 |
|---|---|---|---|---|---|
| Propylene homopolymer (A'-3) | | parts by weight | 90 | 90 | 95 |
| Carbon fiber (F-4) | | parts by weight | 5 | 5 | 5 |
| Modified propylene resin (D-4) | | parts by weight | 5 | | |
| Modified propylene resin (D'-3) | | parts by weight | | 5 | |
| MFR | | g/10min | 3 | 4 | 4 |
| Injection molded product | Bending strength | MPa | 73 | 70 | 50 |
| | Heat deformation temperature (@0.45MPa) | °C | 141 | 139 | 106 |

[Example 16]

Mixing of 57 parts by weight of propylene homopolymer (A'-3) (MFR = 9 g/10 min) (J105G, produced by Prime Polymer Co., Ltd.), 3 parts by weight of modified propylene resin (D-2) produced in Production example 2, 0.1 parts by weight of heat stabilizer IRGANOX1010 (trademark, Ciba Geigy), 0.1 parts by weight of heat stabilizer IRGAFOS168 (trademark, Ciba Geigy), and 0.1 parts by weight of calcium stearate was conducted with a tumbler. Thereafter, melt-kneading was conducted under the following condition with a twin screw extruder while 40 parts by weight of wood flour (F-5) (Su-pa-sui-da #100 (trademark), produced by SANKYO SEIFUN K.K., (particle diameter 150 $\mu$m)) was side-fed, so as to prepare a pellet-shaped propylene based resin composition. A test piece was formed from the propylene based resin composition under the following condition with an injection molding machine [Product No. EC40, produced by

TOSHIBA MACHINE CO., LTD.]. The properties of the formed product are shown in Table 7.

<Kneading condition>

Co-rotation twin screw kneader: Product No. NR-2, produced by Nakatani Machinery Ltd.
Kneading temperature: 190°C
Number of revolutions of screw: 200 rpm

<Injection molding condition>

Injection molding machine: Product No. EC40, produced by TOSHIBA MACHINE CO., LTD.
Cylinder temperature: 210°C
Mold temperature: 40°C

[Comparative example 12]

Production was conducted as in Example 16 except that the modified propylene resin (D'-2) produced in Comparative example 2 was used instead of the modified propylene resin (D-2) in Example 16. The properties of the resulting injection molded product are shown in Table 7.

[Comparative example 13]

Mixing of 60 parts by weight of propylene homopolymer (A'-3) (MFR = 9 g/10 min) (J105G, produced by Prime Polymer Co., Ltd.), 0.1 parts by weight of heat stabilizer IRGANOX1010 (trademark, Ciba Geigy), 0.1 parts by weight of heat stabilizer IRGAFOS168 (trademark, Ciba Geigy), and 0.1 parts by weight of calcium stearate was conducted with a tumbler. Thereafter, melt-kneading was conducted with a twin screw extruder while 40 parts by weight of wood flour (F-5) (Su-pa-sui-da #100 (trademark), produced by SANKYO SEIFUN K.K., (particle diameter 150 μm)) was side-fed, so as to prepare a pellet-shaped propylene based resin composition, as in Example 16. A test piece was formed from the propylene based resin composition with an injection molding machine [Product No. EC40, produced by TOSHIBA MACHINE CO., LTD.], as in Example 16. The properties of the formed product are shown in Table 7.

[Table 7]

| | | | Example 16 | Comparative example 12 | Comparative example 13 |
|---|---|---|---|---|---|
| Propylene homopolymer (A'-3) | | parts by weight | 57 | 57 | 60 |
| Wood flour (F-5) | | parts by weight | 40 | 40 | 40 |
| Modified propylene resin (D-2) | | parts by weight | 3 | | |
| Modified propylene resin (D'-2) | | parts by weight | | 3 | |
| MFR | | g/10min | 8 | 9 | 10 |
| Injection molded product | Yield strength | MPa | 33 | 27 | 23 |

Industrial Applicability

The modified propylene resin according to the present invention can be used as various modifying agents because the amount of low-crystalline and low-molecular-weight components is very small and, furthermore, the balance between the amount of grafts of ethylenic unsaturated bond-containing monomer and the molecular weight of the modified propylene resin is excellent. Specifically, it is possible to apply to various formed products in the field of wrapping materials, e.g., films and sheets, the field of industrial materials, the field of automobiles, and the like, so as to serve as

a fatigue characteristic improver and a strength improver in a propylene resin-glass fiber composition, as a strength improver in a propylene resin-inorganic filler, as a strength improver in a propylene resin-organic filler, as a layer to adhere a propylene resin and another polymer in a multilayer formed product, as a paintability improver, as a printability improver, as an agent to improve suitability for evaporation, as a dye-affinity improver, and as a compatibilizer with other resins, e.g., nylon.

## Claims

1. A modified propylene resin (D) **characterized by** satisfying the following requirements (1) to (4).

   (1) The melting point (Tm) measured with a differential scanning calorimeter (DSC) is 140°C or higher.
   (2) The amount of grafts of ethylenic unsaturated bond-containing monomer after boiling p-xylene washing is 0.1 to 5 percent by weight.
   (3) The amount of components soluble in o-dichlorobenzene at 70°C is 1.5 percent by weight or less.
   (4) The intrinsic viscosity [η] measured at 135°C using a decalin solvent is 0.1 to 4 dl/g.

2. The modified propylene resin according to Claim 1, **characterized by** satisfying the following requirement (5).

   (5) A change in the amount of components soluble in o-dichlorobenzene at 70°C between before and after the boiling p- xylene washing is less than 0.5 percent by weight.

3. The modified propylene resin (D) according to Claim 1 or Claim 2, **characterized by** satisfying the following requirement (6).

   (6) The amount of chlorine measured through ion chromatography is 3 ppm by weight or less.

4. A method for manufacturing a modified propylene resin satisfying the following requirements (1) to (6), the method **characterized by** comprising the steps of blending 100 parts by weight of propylene polymer (A) produced through polymerization in the presence of a metallocene catalyst with 0.1 to 20 parts by weight of ethylenic unsaturated bond-containing monomer (B) and 0.001 to 10 parts by weight of organic peroxide (C) and effecting modification in a solvent or in a molten state.

   (1) The melting point (Tm) measured with a differential scanning calorimeter (DSC) is 140°C or higher.
   (2) The amount of grafts of ethylenic unsaturated bond-containing monomer after boiling p-xylene washing is 0.1 to 5 percent by weight.
   (3) The amount of components soluble in o-dichlorobenzene at 70°C is 1.5 percent by weight or less.
   (4) The intrinsic viscosity [η] measured at 135°C using a decalin solvent is 0.1 to 4 dl/g.
   (5) A change in the amount of components soluble in o-dichlorobenzene at 70°C between before and after the boiling p-xylene washing is less than 0.5 percent by weight.
   (6) The amount of chlorine measured through ion chromatography is 3 ppm by weight or less.

5. The method for manufacturing a modified propylene resin according to Claim 4, the method **characterized by** comprising the steps of blending 100 parts by weight of propylene polymer (A) with 0.1 to 20 parts by weight of ethylenic unsaturated bond-containing monomer (B) and 0.001 to 10 parts by weight of organic peroxide (C) and kneading them by using an extruder, so as to effect modification in a molten state.

6. The method for manufacturing a modified propylene resin according to Claim 4 or Claim 5, the method **characterized in that** the propylene polymer (A) has a melting point (Tm) measured with a differential scanning calorimeter (DSC) of 150°C or higher.

7. A modified propylene resin (D) produced by the method according to any one of Claims 4 to 6.

8. A polypropylene based resin composition (S1) comprising 0.1 to 40 percent by weight of modified propylene resin (D) according to any one of Claims 1, 2, and 7 and 60 to 99.9 percent by weight of polypropylene based resin (P) (where the total of (D) and (P) is 100 percent by weight).

9. A polypropylene based resin composition (S2) comprising 0.1 to 10 percent by weight of modified propylene resin

(D) according to any one of Claims 1, 2, and 7, 3 to 70 percent by weight of filler (F), and 20 to 96.9 percent by weight of polypropylene based resin (P) (where the total of (D), (F), and (P) is 100 percent by weight).

**10.** The polypropylene based resin composition (S2) according to Claim 9, wherein the filler (F) is at least one type of inorganic filler selected from the group consisting of glass fibers, carbon fibers, talc, and magnesium sulfate.

**11.** The polypropylene based resin composition (S2) according to Claim 9, wherein the filler (F) is at least one type of organic filler selected from the group consisting of wood flour and cellulose.

**12.** A formed product comprising the polypropylene based resin composition (S1) according to Claim 8 or the polypropylene based resin composition (S2) according to any one of Claims 9 to 11.

**13.** A laminate comprising the polypropylene based resin composition (S1) according to Claim 8 or the polypropylene based resin composition (S2) according to any one of Claims 9 to 11 in at least one layer.

**Patentansprüche**

**1.** Modifiziertes Propylenharz (D), **dadurch gekennzeichnet, dass** es den folgenden Bedingungen (1) bis (4) genügt.

(1) Der mit einem dynamischen Differenzkalorimeter (DDK) gemessene Schmelzpunkt (Tm) ist 140°C oder höher.
(2) Die Pfropfmenge an ethylenischem Monomer, das ungesättigte Bindungen enthält, nach Waschen mit kochendem p-Xylol beträgt 0,1 bis 5 Gewichtsprozent.
(3) Die Menge an in o-Dichlorbenzol löslichen Komponenten bei 70°C beträgt 1,5 Gewichtsprozent oder weniger.
(4) Die intrinsische Viskosität [□], gemessen bei 135°C unter Verwendung eines Decalinlösemittels, beträgt 0,1 bis 4 dl/g.

**2.** Modifiziertes Propylenharz nach Anspruch 1, **dadurch gekennzeichnet, dass** es der folgenden Bedingung (5) genügt.

(5) Eine Änderung in der Menge an in o-Dichlorbenzol bei 70° löslichen Komponenten zwischen vor und nach dem Waschen mit kochendem p-Xylol beträgt weniger als 0,5 Gewichtsprozent.

**3.** Modifiziertes Propylenharz (D) nach Anspruch 1 oder Anspruch 2, **dadurch gekennzeichnet, dass** es der folgenden Bedingung (6) genügt.

(6) Die Menge an durch Ionenchromatographie gemessenem Chlor beträgt 3 Gewichts-ppm oder weniger.

**4.** Verfahren zur Herstellung eines modifizierten Propylenharzes, das den folgenden Bedingungen (1) bis (6) genügt, wobei das Verfahren **dadurch gekennzeichnet ist, dass** es die Schritte umfasst von Blenden von 100 Gewichtsteilen von durch Polymerisation in Gegenwart eines Metallocenkatalysators hergestelltem Propylenpolymer (A) mit 0,1 bis 20 Gewichtsteilen an ethylenischem Monomer, das ungesättigte Bindungen enthält (B), und 0,001 bis 10 Gewichtsteilen an organischem Peroxid (C) und Durchführen der Modifikation in einem Lösemittel oder in einem geschmolzenen Zustand.

(1) Der mit einem dynamischen Differenzkalorimeter (DDK) gemessene Schmelzpunkt (Tm) ist 140°C oder höher.
(2) Die Pfropfmenge an ethylenischem Monomer, das ungesättigte Bindungen enthält, nach Waschen mit kochendem p-Xylol beträgt 0,1 bis 5 Gewichtsprozent.
(3) Die Menge an in o-Dichlorbenzol löslichen Komponenten bei 70°C beträgt 1,5 Gewichtsprozent oder weniger.
(4) Die intrinsische Viskosität [□], gemessen bei 135°C unter Verwendung eines Decalinlösemittels, beträgt 0,1 bis 4 dl/g.
(5) Eine Änderung in der Menge an in o-Dichlorbenzol bei 70° löslichen Komponenten zwischen vor und nach dem Waschen mit kochendem p-Xylol beträgt weniger als 0,5 Gewichtsprozent.
(6) Die Menge an durch Ionenchromatographie gemessenem Chlor beträgt 3 Gew.-ppm oder weniger.

**5.** Verfahren zur Herstellung eines modifizierten Propylenharzes nach Anspruch 4, wobei das Verfahren **dadurch**

**gekennzeichnet ist, dass** es die Schritte umfasst von Blenden von 100 Gewichtsteilen an Propylenpolymer (A) mit 0,1 bis 20 Gewichtsteilen an ethylenischem Monomer, das ungesättigte Bindungen enthält (B), und 0,001 bis 10 Gewichtsteilen an organischem Peroxid (C) und deren Kneten unter Verwendung eines Extruders, so dass die Modifikation in einem geschmolzenen Zustand bewirkt wird.

6. Verfahren zur Herstellung eines modifizierten Propylenharzes nach Anspruch 4 oder Anspruch 5, wobei das Verfahren **dadurch gekennzeichnet ist, dass** das Propylenpolymer (A) einen mit einem dynamischen Differenzkalorimeter (DDK) gemessenen Schmelzpunkt (Tm) von 150°C oder höher aufweist.

7. Modifiziertes Propylenharz (D), durch das Verfahren gemäß einem beliebigen der Ansprüche 4 bis 6 hergestellt.

8. Polypropylen-basierte Harzzusammensetzung (S1), umfassend 0,1 bis 40 Gewichtsprozent an modifiziertem Propylenharz (D) gemäß einem beliebigen der Ansprüche 1, 2 und 7, und 60 bis 99,9 Gewichtsprozent an Polypropylen-basiertem Harz (P) (wobei die Gesamtmenge von (D) und (P) 100 Gewichtsprozent beträgt).

9. Polypropylen-basierte Harzzusammensetzung (S2), umfassend 0,1 bis 10 Gewichtsprozent an modifiziertem Propylenharz (D) gemäß einem beliebigen der Ansprüche 1, 2 und 7, 3 bis 70 Gewichtsprozent an Füllstoff (F), und 20 bis 96,9 Gewichtsprozent an Polypropylen-basiertem Harz (P) (wobei die Gesamtmenge an (D), (F) und (P) 100 Gewichtsprozent beträgt).

10. Polypropylen-basierte Harzzusammensetzung (S2) nach Anspruch 9, wobei der Füllstoff (F) mindestens ein Typ eines anorganischen Füllstoffes ausgewählt aus der Gruppe bestehend aus Glasfasern, Kohlenstofffasern, Talkum, und Magnesiumsulfat ist.

11. Polypropylen-basierte Harzzusammensetzung (S2) nach Anspruch 9, wobei der Füllstoff (F) mindestens ein Typ eines organischen Füllstoffes ausgewählt aus der Gruppe bestehend aus Holzmehl und Cellulose ist.

12. Geformtes Produkt, umfassend die Polypropylen-basierte Harzzusammensetzung (S1) gemäß Anspruch 8 oder die Polypropylen-basierte Harzzusammensetzung (S2) gemäß einem beliebigen der Ansprüche 9 bis 11.

13. Laminat, umfassend die Polypropylen-basierte Harzzusammensetzung (S1) gemäß Anspruch 8 oder die Polypropylen-basierte Harzzusammensetzung (S2) gemäß einem beliebigen der Ansprüche 9 bis 11 in mindestens einer Schicht.

## Revendications

1. Résine de propylène modifiée (D), **caractérisée en ce qu'**elle obéit aux spécifications suivantes (1) à (4) :

   1) le point de fusion Tf, mesuré au moyen d'un appareil d'analyse enthalpique différentielle (AED), est égal ou supérieur à 140 °C ;
   2) la proportion de greffons de monomère comportant une liaison insaturée éthylénique après lavage avec du para-xylène bouillant vaut de 0,1 à 5 % en poids ;
   3) la proportion de composants solubles dans de l'ortho-dichloro-benzène à 70 °C vaut au plus 1,5 % en poids ;
   4) la viscosité intrinsèque [$\eta$], mesurée à 135 °C dans de la décaline utilisée en tant que solvant, vaut de 0,1 à 4 dL/g.

2. Résine de propylène modifiée, conforme à la revendication 1, **caractérisée en ce qu'**elle obéit à la spécification suivante (5) :

   5) entre avant et après un lavage avec du para-xylène bouillant, la proportion de composants solubles dans de l'ortho-dichloro-benzène à 70 °C varie de moins de 0,5 % en poids.

3. Résine de propylène modifiée (D), conforme à la revendication 1 ou 2, **caractérisée en ce qu'**elle obéit à la spécification suivante (6) :

   6) la teneur en chlore, mesurée par chromatographie ionique, vaut au plus 3 ppm en poids.

4. Procédé de préparation d'une résine de propylène modifiée obéissant aux spécifications (1) à (6) indiquées ci-dessous, lequel procédé est **caractérisé en ce qu'**il comporte les étapes consistant à mélanger 100 parties en poids d'un polymère de propylène (A), produit par polymérisation en présence d'un catalyseur de type métallocène, avec de 0,1 à 20 parties en poids d'un monomère à insaturation éthylénique (B) et de 0,001 à 10 parties en poids d'un peroxyde organique (C), et à effectuer la modification dans un solvant ou à l'état fondu ;

   1) le point de fusion Tf, mesuré au moyen d'un appareil d'analyse enthalpique différentielle (AED), est égal ou supérieur à 140 °C ;
   2) la proportion de greffons de monomère comportant une liaison insaturée éthylénique après lavage avec du para-xylène bouillant vaut de 0,1 à 5 % en poids ;
   3) la proportion de composants solubles dans de l'ortho-dichloro-benzène à 70 °C vaut au plus 1,5 % en poids ;
   4) la viscosité intrinsèque [$\eta$], mesurée à 135 °C dans de la décaline utilisée en tant que solvant, vaut de 0,1 à 4 dL/g ;
   5) entre avant et après un lavage avec du para-xylène bouillant, la proportion de composants solubles dans de l'ortho-dichloro-benzène à 70 °C varie de moins de 0,5 % en poids.
   6) la teneur en chlore, mesurée par chromatographie ionique, vaut au plus 3 ppm en poids.

5. Procédé de préparation d'une résine de propylène modifiée, conforme à la revendication 4, lequel procédé est **caractérisé en ce qu'**il comporte les étapes consistant à mélanger 100 parties en poids de polymère de propylène (A) avec de 0,1 à 20 parties en poids de monomère à insaturation éthylénique (B) et de 0,001 à 10 parties en poids d'un peroxyde organique (C), et à malaxer le tout en se servant d'une extrudeuse, de manière à effectuer la modification à l'état fondu

6. Procédé de préparation d'une résine de propylène modifiée, conforme à la revendication 4 ou 5, lequel procédé est **caractérisé en ce que** le polymère de propylène (A) présente un point de fusion Tf, mesuré au moyen d'un appareil d'analyse enthalpique différentielle (AED), égal ou supérieur à 150 °C.

7. Résine de propylène modifiée (D), produite selon un procédé conforme à l'une des revendications 4 à 6.

8. Composition (S1) de résines à base de polypropylène, comprenant de 0,1 à 40 % en poids d'une résine de propylène modifiée (D), conforme à l'une des revendications 1, 2 et 7, et de 60 à 99,9 % en poids d'une résine à base de polypropylène (P), étant entendu que le total des composants (D) et (P) fait 100 % en poids.

9. Composition (S2) de résines à base de polypropylène, comprenant de 0,1 à 10 % en poids d'une résine de propylène modifiée (D), conforme à l'une des revendications 1, 2 et 7, de 3 à 70 % en poids d'une charge (F), et de 20 à 96,9 % en poids d'une résine à base de polypropylène (P), étant entendu que le total des composants (D), (F) et (P) fait 100 % en poids.

10. Composition (S2) de résines à base de polypropylène, conforme à la revendication 9, dans laquelle la charge (F) est une charge inorganique d'au moins une sorte, choisie dans l'ensemble constitué par des fibres de verre, des fibres de carbone, du talc et du sulfate de magnésium.

11. Composition (S2) de résines à base de polypropylène, conforme à la revendication 9, dans laquelle la charge (F) est une charge organique d'au moins une sorte, choisie dans l'ensemble constitué par de la farine de bois et de la cellulose.

12. Produit mis en forme, comprenant une composition (S1) de résines à base de polypropylène, conforme à la revendication 8, ou une composition (S2) de résines à base de polypropylène, conforme à l'une des revendications 9 à 11.

13. Stratifié comprenant, dans au moins l'une de ses couches, une composition (S1) de résines à base de polypropylène, conforme à la revendication 8, ou une composition (S2) de résines à base de polypropylène, conforme à l'une des revendications 9 à 1l.

[Fig.1]

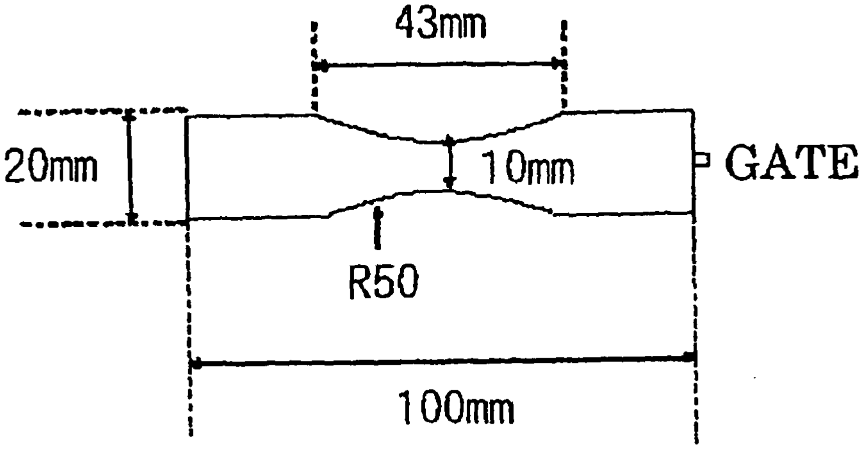


[Fig.2]

A

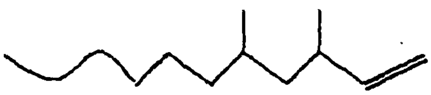

B

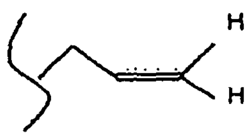

C

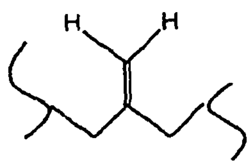

D

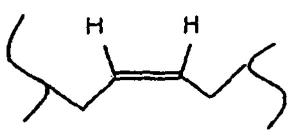

E

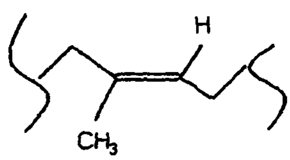

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002020436 A
- JP 2002256023 A
- EP 1580230 A
- WO 0127124 A
- JP 11315109 A
- JP 2006117839 A
- JP 2004002837 A
- JP 7145212 A


### Non-patent literature cited in the description


- **FUMIO IDE.** Jitsuyou Porima- Aroi Sekkei. Kogyou Chousakai Publishing Co., Ltd, 1996, 51
- *Polymer,* 2004, 2883-2888
- *J. Polym. Sci.,* 1970, vol. A-2, 8, 1803
- *Markomol. Chem.,* 1976, vol. 177, 213